# EUROPEAN PATENT APPLICATION

(11) **EP 1 944 638 A2**
(43) Date of publication of application: **16.07.2008**
(21) Application number: 08000259.5
(22) Date of filing: 18.09.2003
(51) Int. Cl.: G02B 6/44

(54) **Low cost, high performance, flexible reinforcement for communications cable**

(30) Priority: 18.09.2002 US 246007; 30.12.2002 US 331900; 31.03.2003 US 404196; 08.04.2003 US 408953; 01.07.2003 US 611513
(62) Divisional of application: 03759283.9
(71) Applicant: Neptco JV LLC, Pawtucket, RI 02861 (US)
(72) Inventor: The designation of the inventor has not yet been filed
(74) Representative: Bevan, Emma

(57) **Abstract**

A flexible reinforcement member 30 for a communications cable comprising:
a plurality of high modulus fibers 32, said plurality of high modulus fibers comprises a plurality of glass fiber strands, wherein said plurality of glass fiber strands 32 comprises a plurality of sized glass fiber strands selected from the group consisting of a plurality of sized or unsized E-type glass fiber strands and a plurality of sized or unsized ECR-type glass fibers; and
a primary saturant 36 coupled to said plurality of high modulus fibers 32, said primary saturant 36 having a melting point below approximately 300 degrees Celsius and a melt viscosity of less than approximately 1000 centipoise.

## Description

### TECHNICAL FIELD AND INDUSTRIAL APPLICABILITY OF THE INVENTION

The present invention relates generally to reinforced communication cables and more specifically to low cost, high performance flexible reinforcement for communications cables.

### BACKGROUND OF THE INVENTION

The market for telecommunications cable and related products is in an over capacity state. The large number of suppliers of these products has put tremendous pressure on the industry to provide communications cable with increased performance at lower costs.

Optical communications cables consist essentially of a plurality of randomly placed optical communication fibers, typically in ribbon form, contained within a polymer jacket. Of course, other types of communications cables can have single optical fibers, bundled optical fibers, or tight buffered optical fibers. The fibers are typically tight or loose buffered within a polymer tube contained within a portion of the jacket. One or more flexible reinforcement members and stiff strength members may also be contained within a portion of the polymer jacket outside of the central tube or buffer tubes to provide support and prevent kinking of the communication fibers. These reinforcement members are applied by being wrapped helically around the inner core prior to outer jacketing (as in optical loose tube cable types) or are directly extruded into the jacket matrix (as in twisted copper telephone cable).

The flexible reinforcements for cables are made in a wide variety of methods. Typically, these reinforcements are manufactured by first applying a binder and sizing containing a film former and oils or coupling agents to a glass strand and then applying a relatively heavy layer of a water-based, high molecular weight polymer latex or wax. The coated strands may then be introduced to the communications cables by known methods.

These coatings may impart many important properties to the flexible reinforcements both during manufacture and after introduction to the cable. For example, these coatings prevent abrasion of the glass fibers during the combination with the reinforcement and during deployment. Also, these coatings prevent adhesion of the reinforcing fibers to the polymer jacket. These coatings may also impart adhesion if desired to the polymer jacket, for example, as is the case with polyvinyl chloride (PVC) jacketed communications cables. Additionally, these coatings can be super absorbent and can thus prevent water seepage from damaging the optical fibers.

One problem with presently available reinforcements is that they are relatively expensive to manufacture. For example, a relatively heavy layer of high molecular weight polymer latex or wax must be applied to the fibers in order to impart the mechanical properties necessary for optical and copper telecommunications cables. Also, these high molecular weight polymers have extremely high melt viscosities. Further, air can be trapped within the interstices of the fibers themselves after the introduction of the high molecular weight polymers, which can lead to premature degradation of the fibers and strand deficiencies. Also, because water-based high molecular weight coatings are typically used, a high-energy water-removal step is required before the fiber reinforcements can be introduced into the cabling. These water-based coatings, typically in emulsion form, are expensive as well.

Deterioration caused by the invasion of moisture beneath the exposed surfaces of articles used in outdoor environments is a well-known problem in the telecommunications industry. This deterioration includes oxidative deterioration caused by reaction of water with the surfaces of reinforcing fibers used in these articles, as well as water-induced corrosion. In marine environments, for example, the problems associated with water logging are particularly compounded by the salinity of the environment. The presence of salt in such aqueous environments hastens the oxidative decomposition. In non-saline environments, for example in environments having high atmospheric humidity, water-resistant coatings are necessary to protect the structures and equipment surfaces from moisture-induced decomposition.

Articles affected by the deterioration described above include items having a surface exposed to high moisture or humidity. Examples of such articles include reinforced rods and cables, such as fiber optic or telecommunications cables. These telecommunications cables are often used in situations where they are buried underground or submerged in water over long periods. As such, protection from water damage is critical to the structural integrity of these cables and to the success of the functions they are intended to perform. A telecommunications cable, for example, may include a core comprising a glass rod that acts as a stiffening or reinforcing member. This rod contributes to the rigidity of the cable. When water penetrates to contact the core element of the cable, corrosion or chemical deterioration of the cable infrastructure may result.

U.S. Patent 5,925,461 teaches a hot melt coating adhesive having a 20-50 parts by weight dispersion of a water-swellable particulate material to 100 parts by weight of hot melt. The above patent further teaches the process of using a heated bath with the above formulation, submerged saturator bars, stripper die, shaping rollers and winder.

The process described in the above patent has difficulties. The recommended hot melt material is an ethylene vinyl acetate (EVA) polymer. The superabsorbent particulate is most likely a sodium or potassium polyacrylate salt, also referred to as a superabsorbent polymer (SAP). Examples of such polymers include, but are not limited to, ethylene vinyl acetate (EVA) polymers, block copolymers of polybutylene terepthalate and long chain polyether glycols, thermoplastic elastomers, olefins or urethanes, polypropylene, polyethylene, polyurethane or low molecular weight mineral wax. Polyacrylamides may also be utilized.

It is well known that polymers such as EVA are high molecular weight and subsequently display very high melt viscosities, even at very elevated temperatures. Typical sizes, binders and water-based impregnants have viscosities in the 20-200 cp range. These lower viscosity fluids easily penetrate the glass fiber bundle, coating individual glass filaments, and results in both well protected fiber-fiber abrasion, as well as subsequent high measured tensile strength, due to the good stress translation afforded by the complete wet-through of the matrix coating.

Conversely, attempting to impregnate a bundle of glass filaments with a highly viscous fluid or melt, such as that taught in U.S. 5,925,461, would quickly result in extremely high shear forces between the glass filaments and the submerged bars in the bath. These forces could quickly exceed the individual tensile strength of the fibers, breaking out individual filaments and eventually breaking out the strand. This can be minimized if the process moves very slowly, probably much less than 10-30 meters/min. Even then, the very viscous mixture would have great difficulty efficiently penetrating the interstices between glass filaments unless other process equipment is installed, such as heated applicator drums or rollers. Additionally, adding extra equipment in general complicates a process line and makes it more prone to disruptions.

The present invention solves the above problems in fabricating water swellable, semi-flexible cable reinforcements of small diameter by using blends of hot melt coatings in various coating sequences. In another embodiment, a previously coated superabsorbent strand is coated with a hot melt coating.

Rodents cause significant problems in cable environments. Their incessant need to chew in order to control tooth size is relentless. One correctly placed incision by a rodent could destroy an optical fiber and result in the loss of millions of dollars in sales of telecommunications traffic. To date, cable manufacturers have used steel tapes to armor the cable. This steel barrier is highly effective in preventing rodents from breaching the cable. However, it has the same deterring effect on cable installers. The result is not only additional expense in cable manufacturing but also in installation.

In the past, rodent resistant cables have been constructed to include steel tape-wound outer jackets. In other designs, an inner jacket of thermoplastic is overlaid with a corrugated steel tape, the overlap of which is welded to produce a watertight armouring. For example, an outer polyethylene cable jacket is bonded to a polymer coating on the steel armouring enhancing the protection given to the cable against rodents. In other rodent resistant cable designs, the cable is protected by a plurality of spikes, which extend radially outward from an outer jacket, which completely encircles and covers the cable. The use of poisons has also been employed inside cables. There is a need to provide a low cost, flexible reinforcement member for communications cable that deters rodents.

In general, optical communications cables consist essentially of a plurality of randomly placed optical communication fibers, typically in ribbon form, contained within a polymer jacket. Of course, other types of communications cables can have single optical fibers, bundled optical fibers, or tight buffered optical fibers. The fibers are typically tight or loose buffered within a polymer tube contained within a portion of the jacket. One or more flexible reinforcement members and stiff strength members may also be contained within a portion of the polymer jacket outside of the central tube or buffer tubes to provide support and prevent kinking of the communication fibers. These reinforcement members are applied by being wrapped helically around the inner core prior to outer jacketing (as in optical loose tube cable types) or are directly extruded into the jacket matrix (as in twisted copper telephone cable).

Flexible reinforcements for cables are made in a wide variety of methods. Typically, these reinforcements are manufactured by first applying a binder and sizing containing a film former and oils or coupling agents to a glass strand and then applying a relatively heavy layer of a water-based, high molecular weight polymer latex or wax. The coated strands may then be introduced to the communications cables by known methods.

These coatings may impart many important properties to the flexible reinforcements both during manufacture and after introduction to the cable. For example, these coatings prevent abrasion of the glass fibers during the combination with the reinforcement and during deployment. Also, these coatings prevent adhesion of the reinforcing fibers to the polymer jacket. These coatings may also impart adhesion if desired to the polymer jacket, for example, as is the case with polyvinyl chloride (PVC) jacketed communications cables. Additionally, these coatings can be super absorbent and can thus prevent water seepage from damaging the optical fibers.

### SUMMARY OF THE INVENTION

Low cost, high performance, flexible reinforcements are provided that can be used for both optical and copper communications cables. The reinforcement members made according to the preferred process are more rigid than glass reinforcement members made according to the prior art as described above, but are less rigid than glass pultruded rods. Communications cables utilizing these members are lightweight, exhibit an improved combination of strength and flexibility compared to traditional communications cables. These communication cables may then be installed into underground ducts using more economical and faster installation techniques such as blowing-in installation.

The flexible reinforcement member is made by melting and then applying a low molecular weight, low melt viscosity thermoplastic material, such as modified or wax, to fiber material. The fiber material can be a glass strand or bundle, or combination of strand and bundle that penetrates the interstices within and between the fibers. Glass fibers that may be used include E-type glass fibers or ECR-type glass fibers such as Advantex® type glass fibers, both available from Owens Coming. Additionally, other fibrous materials can be used as will be described below.

The wax material is air cooled prior to the introduction of a second layer of nonwater-based high molecular weight ("MW") polymer, such as EAA, that is applied to the strand in an extruder or similar device. The high molecular weight polymer surrounds the strands, but does not penetrate. The high MW polymer is tough, but flexible, and gives the strand mechanical properties for use in cable systems. The overall amount of high MW polymer applied to the strand is less than is present in cables of the prior art.

Alternatively, the member is made by first applying a low molecular weight, thermoplastic blend of a blend of low molecular weight, low melt viscosity and high molecular, relatively high melt viscosity thermoplastic or thermoplastic elastomeric material to the fiber material. An example of this is a blend of microcrystalline wax and a plasticized styrene butadiene rubber. The blend penetrates the interstices within and between the fibers to form a member having adequate mechanical properties. As a topcoat is not needed, a cost savings is realized in terms of manufacturing and raw material costs. Of course a topcoat could still be applied if so desired

This flexible reinforcement made according to these processes exhibits lower amounts of trapped air that is typically trapped within the strands and/or bundles, thereby decreasing the likelihood and amount of potential degradation within the fiber. The method also prevents strand deficiencies such as fiber-fiber abrasion and water penetration, and can thereby increase the strength of the strands, and hence the reinforcement, without the application of a heavy layer of high molecular weight polymer. Further, by not using a water-based coating, additional savings is realized by both in terms of the water removal and raw material costs.

In a second embodiment, the high molecular weight topcoat is applied to an uncoated fiber or bundle, i.e., the first coating step is omitted. By omitting the first coating step and coating with the high molecular topcoat, the fiber or bundle is softer and thus more conformable as it is wrapped around the cable core during cable manufacturing. Further, additional cost savings are incurred in terms of raw materials and manufacturing.

Alternatively, the high molecular weight topcoat may be applied to a fiber or bundle that has been previously coated in an offline process, The coatings include, but are not limited to, polymer coatings including thermoplastic coatings, sizing (such as starch/oil or epoxy/silane), finishes, waxes, curing agents, and conventional thermosetting resins including, but not limited to, epoxies, polyimide, vinyl esters and acrylics.

In a third embodiment, a high molecular weight polymer topcoat is applied via a die box having at least one slotted, tapered die to remove excess topcoat from the coated strand. After the strand passes through the slotted, tapered die, it maintains a flat, low profile, configuration. The low profile reinforcement member has several advantages when installed in a cable. It can cover significantly more of the outer cable core thereby providing enhanced reinforcement properties, i.e., preventing adhesion of the underlying optical fibers, buffer tubes containing optical fiber, or other cable core components to the polymer jacket. The flat reinforcement member also reduces the overall cable diameter, which, in turn, reduces the amount of jacketing compound required to coat the exterior of the cable.

In a forth embodiment, a rodent resistant flexible reinforcement is provided. To deter a rodent from chewing a cable, it is preferred that a high modulus glass fiber be used. It is important that the high modulus glass fiber have a large enough diameter to provide substantial irritation to the mouth of a rodent. The diameter of the fiber is preferably between about 1 and about 89 microns, more preferably between about 15 and about 36 microns and most preferably between about 34 and about 36 microns.

In a fifth embodiment, a water-swellable, flexible reinforcement is provided. The water-swellable, flexible reinforcement is made by first applying a primary saturant, as described above (first embodiment) and then applying a water-swellable topcoat. Alternatively, a previously coated strand, coated with a superabsorbent coating, is coated with a high molecular weight, hot melt polymer as described above.

Other objects and advantages of the present invention will become apparent upon considering the following detailed description and appended claims, and upon reference to the accompanying drawings.

### BRIEF DESCRIPTION OF THE DRAWINGS

Fig. 1 is a cross-sectional view of a flexible reinforcement member according to a first embodiment of the present invention;
Fig. 2 is a cross-sectional view of a flexible reinforcement member according a first embodiment of the present invention;
Fig. 3 is a cross-sectional view of a flexible reinforcement member according to a first embodiment of the present invention;
Fig. 4 illustrates an assembly line used for making the flexible reinforcement member according to Figs. 1-3;
Fig. 5 is a cross-sectional view of a flexible reinforcement member according another embodiment of the present invention;
Fig. 6 is a cross-sectional view of a flexible reinforcement member according to another embodiment of the present invention;
Fig. 7 is a cross-sectional view of a flexible reinforcement member according to another embodiment of the present invention;
Fig. 8 illustrates an assembly line used for making the flexible reinforcement member according to Figs. 5-7; and
Figs. 9-20 illustrate communications cables having the flexible reinforcement members of Figs. 1-3 and Figs. 5-7.
Fig. 21 illustrates a graph comparing glass transition temperatures of traditional coated reinforcements with flexible coated reinforcements of the present invention.
Fig. 22 illustrates a cross-sectional view of a flexible reinforcement member according to a second embodiment of the present invention.
Fig. 23 is a cross-sectional view of a flexible reinforcement member according to a second embodiment of the present invention.
Fig. 24 is a cross-sectional view of a flexible reinforcement member according to a second embodiment of the present invention.
Fig. 25 illustrates an assembly line used for making the flexible reinforcement member according to Figs. 22-24.
Fig. 26 illustrates another example of an applicator used for making the flexible reinforcement member.
Fig. 27 illustrates another example of an applicator used for making the flexible reinforcement member.
Fig. 28 illustrates an example of a stripper die used in making the flexible reinforcement member.
Fig. 29 illustrates a cross-sectional view of a flexible reinforcement member according to a third embodiment of the present invention.
Fig. 30 illustrates a cross-sectional view of a flexible reinforcement member according to a third embodiment of the present invention.
Fig. 31 illustrates a cross-sectional view of a flexible reinforcement member according to a third embodiment of the present invention.
Fig. 32 illustrates the third embodiment of the present invention as installed in a telecommunications cable.
Fig. 33 illustrates the third embodiment of the present invention as installed in a telecommunications cable.
Fig. 34 illustrates the die box used in making the third embodiment of the flexible
reinforcement member.
Fig. 35 illustrates the die used in making the third embodiment of the flexible reinforcement member.
Fig. 36 illustrates the assembly line used in making the flexible reinforcement of Figs. 29-31.
Fig. 37 illustrates an alternative die used in making the third embodiment of the flexible reinforcement member.
Fig. 38 illustrates the fifth embodiment of the flexible reinforcement member as used in a telecommunications cable.

### DETAILED DESCRIPTION AND PREFERRED EMBODIMENTS OF THE INVENTION

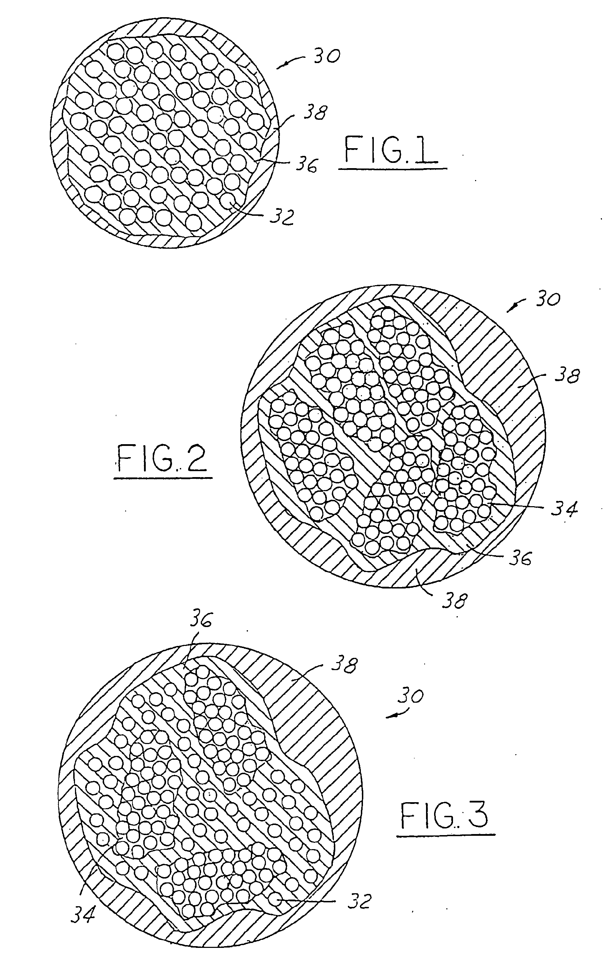

The present invention relates to a new rodent resistant, flexible reinforcement member that may be used in telecommunication cables such as optical cables or copper cables. Figs.1-3 below illustrate a first embodiment of the flexible reinforcement member.

Fig. 1 illustrates a cross-sectional view of the flexible reinforcement member 30 according to a preferred embodiment of the present invention. The member 30 is comprised of a strand having a plurality of single filaments 32 of glass fibers saturated with a primary saturant 36. The diameter of the filaments is preferably between about 1 and about 89 microns, more preferably between about 15 and about 36 microns and most preferably between about 34 and about 36 microns.

Referring now to Fig. 2, another preferred embodiment shows the member 30 having a plurality of strand bundles 34 replacing the individual filaments 32. Fig. 3 depicts the member 30 as having a combination of both filaments 32 and bundles 34. Again, in both Figs. 2 and 3, the fibers that comprise the filaments 32 and/or bundles are saturated with the primary saturant 36. The filaments 32 are preferably filamentized strands and are approximately 1 to about 86 microns in diameter, more preferably between about 15 and about 36 microns in diameter and most preferably between about 34 and about 36 microns in diameter. The bundles 34 have approximately 100-4000 filaments per bundle 34 and have a linear density of approximately 200-9600 grams/kilometer.

The filaments 32 and bundles 34 are preferably glass fibers such as E-type glass fibers or ECR-type glass fibers such as Advantex® type glass fibers, both available from Owens Coming. Additionally, other fibers may be used including, but not limited to, high silica glass such as S-2 Glass®, Zentron®, Vetron® or other high strength glass from Advanced Glass Yarns (Aiken, SC) or other glass manufacturers; high tenacity, linear, or other high modulus reinforcements. The term "high modulus" is defined as the modulus of elasticity, also known as Young's Modulus, which is a coefficient of elasticity representing the ratio of stress to strain as a material is deformed under dynamic load. It is the measure of softness or stiffness of a material. In the case of "high modulus" reinforcements, the values for the stress to strain ratio will typically exceed 30 GPa. For the above examples, the typical elastic modulus of each are as follows: E-Glass = 72 GPa; S-2 Glass® fiber = 90 GPa.

The glass fibers are preferably sized with a sizing composition or finishing agent prior to introduction within the member 30. Such sizings include epoxy/silane, vinylester, polyester, or starch/oil type sizings. Preferably, Owens Coming sizing 158B, 111A or 366 is used.

The saturant 36 fills in the interstices between the strands 32 and/or bundles 34 and comprises about 0.1-35 percent, and more preferably about 15 percent, of the total weight of the member 130. The saturant 36 also fills the voids within the filaments 32 and/or bundles 34 caused by abrasions and or defects in the manufacturing process. In this way, the saturant 36 functions to lower the amount of air that is typically trapped between the filaments 32 and bundles. The saturant also lowers the amount of air that may be trapped within the bundles 34. The saturant 36 also prevents filament deficiencies such as fiber-fiber abrasion, water penetration, and can increase the strength of the filaments 32. In these ways, the saturant 36 increases the strength of the member 30.

The saturant 36 comprises a low molecular weight mineral wax having melting points under approximately 300 degrees Celsius, preferably less than 150 degrees Celsius and most preferably between about 100 and about 120 degrees Celsius and melt viscosities of less than approximately 1000 centipoise (cps), preferably less than 500 centipoise, that allow easy saturation into the fiber strands 32 or bundle 34. One preferable mineral wax is a microcrystalline wax such as Witco Chemical's Multiwax, which has a melting point of approximately 70-80 degrees Celsius (160-170 degrees Fahrenheit) and a melt viscosity of approximately 50-100 cps. Other examples of mineral waxes that may also be used include polyalphaolefin waxes, such as Baker Petrolite Vybar 260, and polyethylene waxes, such as Baker Petrolite Polywax 100. Additionally, modified polyethylenes and polypropylenes may also be used, such as Eastman Chemicals Epolene E-15 and E-43 oxidized polyethylene or Epolene G-3015 maleated polypropylene.

The primary saturant 36 is typically between 90/10 to 10/90 by weight blend, and more preferably a 50/50 by weight blend, of a microcrystalline wax and styrene butadiene rubber ("SBR") compound. As above, one preferred microcrystalline wax that may be used is Witco Chemical's Multiwax. One preferred SBR compound used in the saturant 36 is DHM 712, available from DHM Adhesives, Inc. The DHM 712 has a softening point of approximately 95 degrees Celsius (203 degrees Fahrenheit) and a viscosity of 2250 cps at 177 degrees Celsius (350 degrees Fahrenheit). Blends of other high and low viscosity thermoplastic polymers or highly plasticized polymers can be similarly used, as long as the primary saturant material has less than 500 cps melt viscosity.

Other examples of mineral waxes that may also be used include polyalphaolefin waxes, such as Baker Petrolite Vybar 260, and polyethylene waxes, such as Baker Petrolite Polywax 100. Additionally, modified polyethylenes and polypropylenes may also be used, such as Eastman Chemicals Epolene E-15 and E-43 oxidized polyethylene or Epolene G-3015 maleated polypropylene.

The high molecular weight polymer topcoat 3 8 surrounds the saturant 36, but does not penetrate within the saturant 36 to the filaments 32 and bundle 34. The topcoat 38 comprises approximately 0.1-35 percent, preferably between about 5 and about 20 percent and more preferably between about 10 and about 15 percent, of the total weight of the member 30. The topcoat 38 is tough, but flexible, and gives the member 30 its mechanical properties. The topcoat 38 is a higher modulus coating that changes the characteristics of the member 30. The topcoat 28 offers polyethylene adhesion and stiffens the member 30. Table 1 shows the polyethylene adhesion of individual glass strands according to ASTM D1871, Test Method #53.

| Table 1 - Polyethylene Adhesion Individual Strand Pull-Outs (1bf/0.5 in) | | | | | |
|---|---|---|---|---|---|
| | Wax Only | Wax+EAA Topcoat | DHM 712 Only | DHM 712 + EAA Topcoat | DHM 712/EAA 70:30 Blend |
| 1 | 21.9 | 54.9 | 24.7 | 58.9 | 65.5 |
| 2 | 31.5 | 56.0 | 32.3 | 60.5 | 19.1 |
| 3 | 33.1 | 70.5 | 41.3 | 51.5 | 62.3 |
| 4 | 32.5 | 63.1 | 52.8 | 50.9 | 53.1 |
| 5 | 38.8 | 64.6 | 40.3 | 70.1 | 13.7 |
| 6 | 27.1 | 55.8 | 39.1 | 48.4 | 85.6 |
| 7 | 28.1 | 74.1 | 49.3 | 48.2 | 32.9 |
| 8 | 14.4 | 61.1 | 21.4 | 68.6 | 40.9 |
| 9 | 29.3 | 91.5 | 32.5 | 66.1 | 41.5 |
| 10 | 18.1 | 68.1 | 37.4 | 61.0 | 70.8 |
| 11 | 27.7 | 46.6 | 43.1 | 61.3 | 70.5 |
| 12 | 26.9 | 68.3 | 32.9 | 68.2 | 28.7 |
| 13 | 22.5 | 68.6 | 39.5 | 61.8 | 75.0 |
| 14 | 26.6 | 64.5 | 31.8 | 57.2 | 74.8 |
| | | | | | |
| Average | 27.0 | 64.8 | 37.0 | 59.5 | 52.5 |
| Std. Dev. | 6.3 | 10.6 | 8.6 | 7.4 | 23.0 |
| C.I. | 4 7 | | 6 | 5 | 16 |
| Upper | 31 | 72 | 43 | 65 | 68 |
| Lower | 23 | 58 | 31 | 54 | 37 |
| Test was strand pull out from polyethylene plaques. Raw data recorded in pounds of force per 0.5 inch imbedded strand. | | | | | |
| Polyethylene was cable jacketing grade, black compounded. | | | | | |
| Pulls done at room temperature. | | | | | |
| Test method used: ASTM D1871 Adhesion of Glass to PVC; Test Method #53. | | | | | |

One preferred topcoat 38 is an ethylene acrylic acid (EAA) polymer such as Dow Chemical's Primacor 5986 or 5990I ethylene acrylic acid resin, which is useful if adhesion to a polyethylene jacket is required. Other polymers that may comprise the topcoat 38 include polyethylene (PE) or polypropylene (PP) polymers, or copolymers of PE and PP, available from manufacturers such as Dow Chemical, Shell, and Basell. Still further preferable topcoats 38 include ethylene vinyl acetate (EVA) copolymers, styrene-butadiene-styrene (SBS), polybutadiene terephthlate polyether glycol (PBT-PEG), polyamide or many other polyolefins and thermoplastic elastomers available from manufacturers such as Henkel, GLS and E. I. Du Pont de Nemours. Of course, as one skilled in the art would appreciate, the ultimate choice of topcoats 38 is dependent upon the end use of the communications cable having the reinforcement member 30.

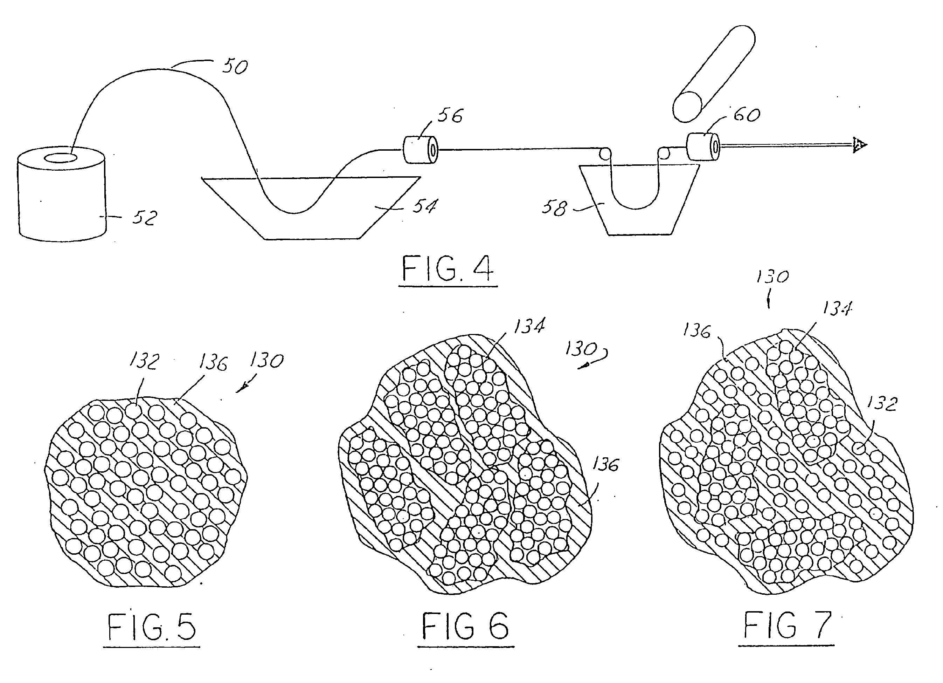

Fig. 4 illustrates the process for making the members 30 of Figs. 1-3. The process begins by unrolling the fibers 50 from a reel 52. The fibers 50 represent filaments 32, bundles 34, or a combination of filaments 32 and bundles as depicted in Figs. 1-3. The fibers 50 are introduced to an application device 54, here a heated immersion bath 54 that holds the saturant 36. The bath 54 is maintained between approximately 90-100 degrees Celsius (200-210 degrees Fahrenheit) such that the primary saturant 36 has a viscosity of approximately 50-100 cps.

The coated fibers 50 exit the bath 54 and are introduced to a stripper die 56. In the embodiment shown in Fig. 4, the stripper die 56 has an internal diameter of approximately 0.84 millimeters (0.033 inches) to strip back the excess saturant 36 and to help impregnate the fibers 50. The coated fibers 56 are then introduced to an applicator 58 containing the topcoat 38. Preferably, the applicator 58, as shown here, is a Nordson hot melt applicator 58. The topcoat 38 enters the applicator 58 through an orifice (not shown) For Dow Primacor 5990I, which has a melt point index of 1300 grams per 10 minutes, the material is heated to approximately 125 degrees Celsius (257 degrees Fahrenheit) as it enters the fixed orifice through a thick hose (not shown) and applied to the fibers 50. The fibers 50 exit the applicator 58 and enter a second stripper die 60 having an inner diameter of approximately 1.12 millimeters (0.044 inches). The second stripper die 60 removes excess topcoat 38 and smoothes the outer surface of the topcoat 38. The topcoat is then cooled to form the reinforcement member 30.

In an alternative embodiment not shown, an extruder using a crosshead die or similar applicator apparatus may be used in place of the applicator 58 to introduce the topcoat 38 to the coated fibers 50.

While the members 30 as shown in Figs. 1-3 above exhibit excellent mechanical properties, the application of the topcoat 38 to the fibers 50 can be difficult due to the high viscosity nature of the topcoat 38 material. Fig. 5-7 illustrates an alternative method for making a flexible reinforcement member 130 that address these issues. The embodiments utilize the same strand and/or bundle design as shown Figs. 1-3, but utilize a different low molecular weight primary saturant 136 to achieve the desired mechanical properties of the members 130 without the need for the topcoat.

Thus, as shown in Fig. 5, the member 130 is comprised of a strand of a plurality of single filaments 132 of glass fibers, while Fig. 6 utilizes bundles 134, and Fig. 7 utilizes combinations of filaments 132 and bundles 134 saturated with a low molecular weight primary saturant 136.

Here, the primary saturant 136 is a 90/10 to 10/90 by weight blend, and more preferably a 50/50 by weight blend, of a microcrystalline wax and styrene butadiene rubber ("SBR") compound. As above, one preferred microcrystalline wax that may be used is Witco Chemical's Multiwax. One preferred SBR compound used in the saturant 136 is DHM 712, available from DHM Adhesives, Inc. The DHM 712 has a softening point of approximately 95 degrees Celsius (203 degrees Fahrenheit) and a viscosity of 2250 cps at 177 degrees Celsius (350 degrees Fahrenheit). Blends of other high and low viscosity thermoplastic polymers or highly plasticized polymers can be similarly used, as long as the primary saturant material has less than 500 cps melt viscosity.

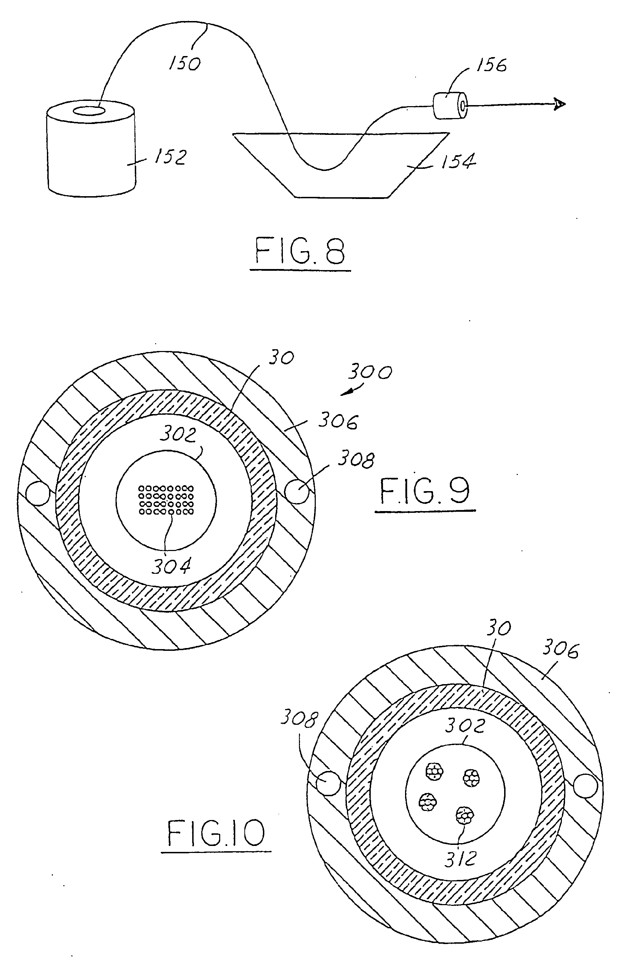

Fig. 8 illustrates the process for making the members 30 of Figs. 5-7. The process begins by unrolling the fibers 150 from a reel 152. The fibers 150 represent strands 132, bundles 134, or a combination of strands 132 and bundles 134 as depicted in Figs. 5-7. The fibers 150 are introduced to a first application device 154, here a heated immersion bath 154 that holds the saturant 136. The bath 154 is maintained between approximately 120-150 degrees Celsius (250-300 degrees Fahrenheit) such that the primary saturant 136 has a viscosity of approximately 50-100 cps. The coated fibers 150 exit the bath 154 and are introduced to a stripper die 156. In the embodiment shown in Fig. 8, the stripper die 156 has an internal diameter of approximately 0.84 millimeters (0.033 inches) to strip back the excess saturant 136 and to help impregnate the fibers 150. The coated fibers 150 are then cooled to form the reinforcement member 130 having a diameter of between approximately 0.5 and 1.0mm.

The flexible reinforcement members 30, 130 of Figs. 1-3 and 5-7 are then available to be inserted into a communications cable by known techniques. Figs. 9-20 illustrate many of the possible types of communications cables utilizing these flexible reinforcement members 30, 130. Each is described below.

Figs. 9-14 illustrate a 48-fiber "Dry Cable" structure 300 according to six preferred embodiments of the present invention. Each of these structures 300 having the flexible reinforcement member 30 or 130 offers increased strength and flexibility as compared to structures with traditional reinforcement members.

As shown in Fig. 9, the structure 300 comprises a gel-filled loose tube 302 having an optical fiber ribbon 304. The loose tube 302 is surrounded by the flexible reinforcement member 30 and covered with a high density polyethylene ("HDPE") sheath 306. Also shown is a strength member 308, which could in this case be made by either the present invention or by conventional thermosetting processes.

In Fig. 10, the optical fiber ribbon 304 is replaced with a plurality of optical fiber bundles 312 contained within the gel filled loose tube 302.

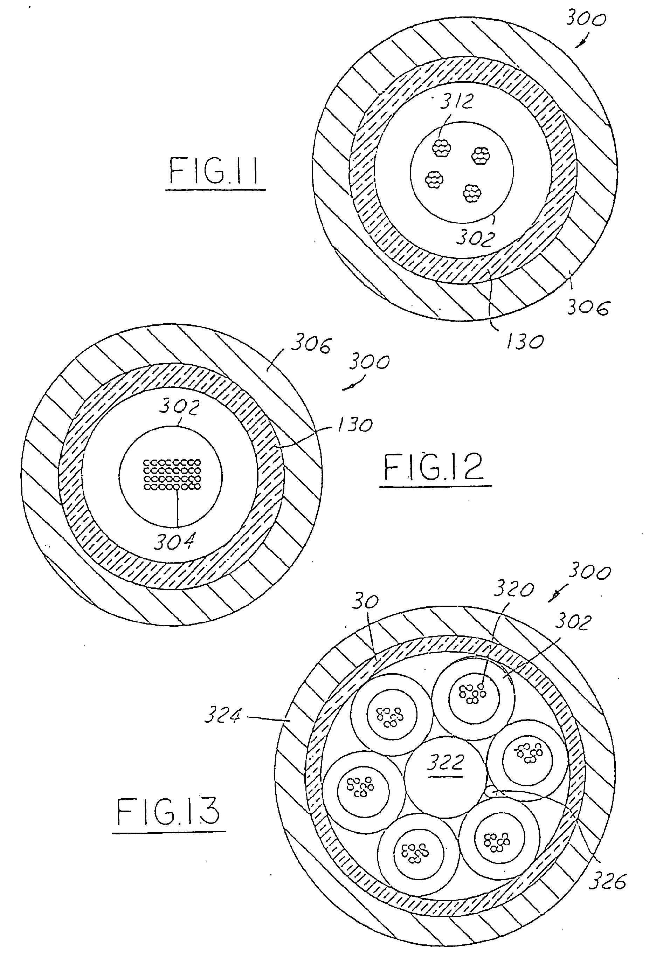

In Figs. 11 and 12, the flexible reinforcement member 130 replaces the flexible reinforcement member 30 of Figs. 10 and 9, respectively. These embodiments also do not require the rigid strength members 308.

Referring to Fig. 13, a plurality of gel filled loose tubes 302 each filled with individual optical fibers 320 is shown surrounding a rigid central strength member 322. The flexible reinforcement member 30 then surrounds the loose tubes and is covered with an HDPE sheath 324. Also shown is a water swellable thread 326.

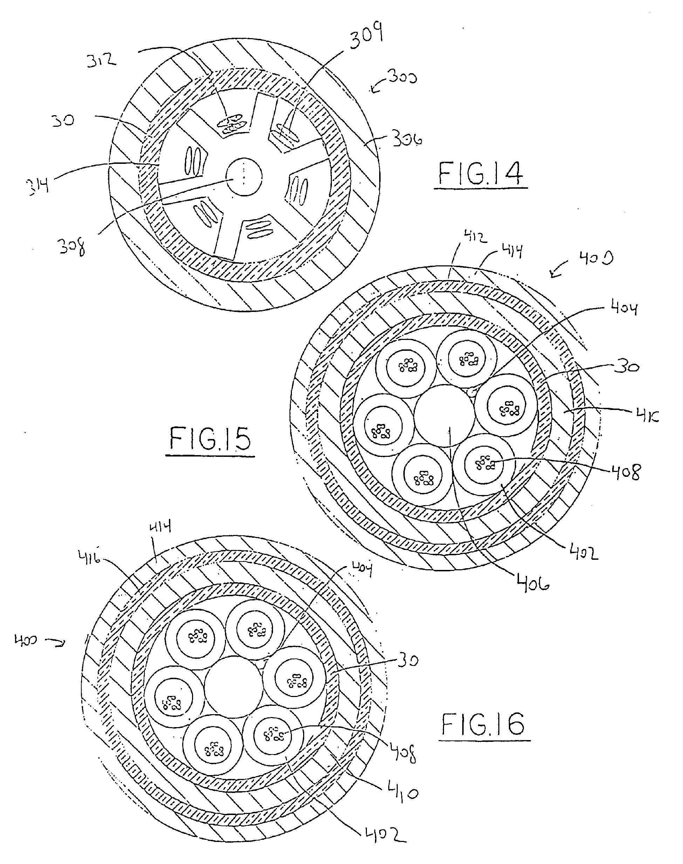

In Fig. 14, a water blocking tape 314 is introduced between the flexible reinforcement member 30 and the optical fiber bundles 312 as an additional moisture barrier layer. Here, the rigid strength member 308 is centrally located and within a slotted core structure containing the optical fiber bundles 312 within slots 309. The strength member is not within the HDPE sheath 306 as in Figs. 9-12.

Figs. 15-18 illustrate a 48-fiber "Rodent Resistant Cable" structure 400 according to five preferred embodiments of the present invention. Each of these structures 400 having the flexible reinforcement member 30 or 130 offers increased strength and flexibility as compared to structures with traditional reinforcement members.

Referring now to Fig. 15, the structure 400 comprises a gel filled loose tube 402 and a water swellable thread 404 surrounding a central strength member 406. Each loose tube 402 has a plurality of loose optical fibers 408 and is surrounded by the flexible reinforcement member 30, an inner HDPE sheath 410, a layer of glass tape reinforcement 412, and an outer HDPE sheath 414.

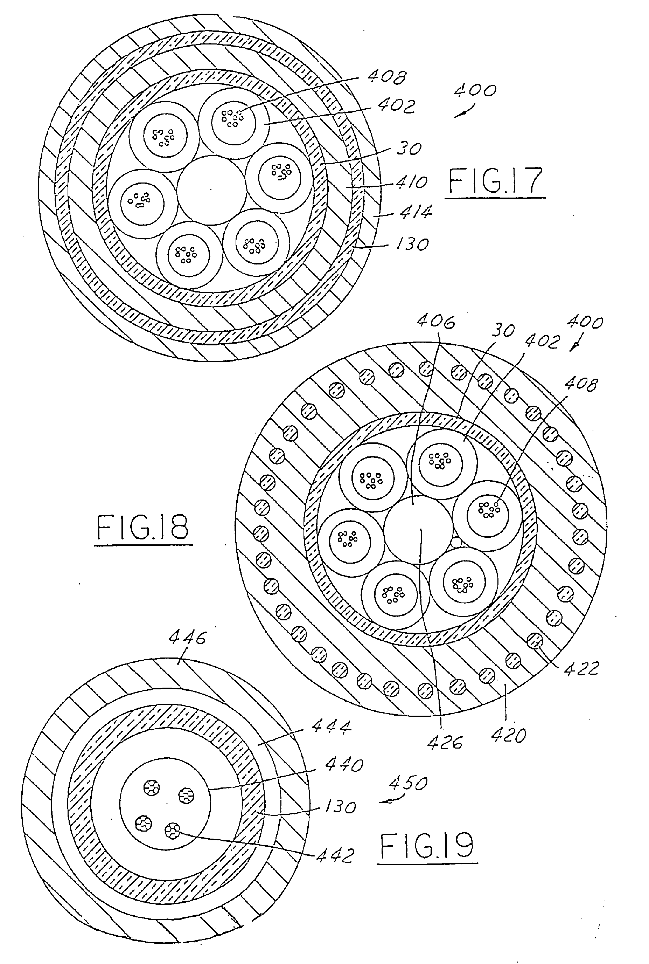

In Fig. 16, a layer of glass flex reinforcement 416 replaces the glass tape reinforcement 412. In Fig. 17, a layer of flexible glass reinforcement 130 replaces the glass tape reinforcement 412.

Referring now to Fig. 18, the loose tubes 402 are first surrounded by the flexible reinforcement member 30, which is surrounded by an outer HDPE sheath 420 having a plurality of fiber glass reinforcing rods 422. The rods 422, typically about 1.3 mm in diameter, are preferably evenly spaced within the HDPE sheath 420 and equidistant from a point 426 defining the center of the central strength member 406.

In Fig. 19, a buffer tube cable 450 according to another preferred embodiment comprises a gel filled loose tube 440 having a plurality of optical fiber bundles 442 that is surrounded by a flexible reinforcement member 130. The member 130 is then surrounded by a 0.4 mm thick layer of Nylon 12 sheath 444 and an outer HDPE sheath 446.

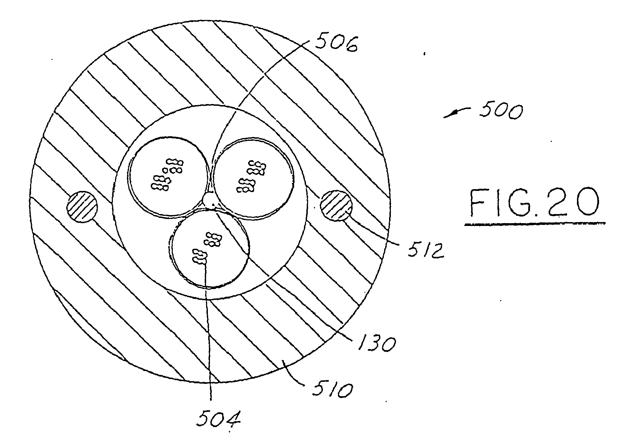

Referring to Fig. 20, a buffer tube cable 500 according to another preferred embodiment is shown as having a plurality of buffer tubes 502 each having 12 optical fibers 504 surrounding a flexible reinforcement member 130 having a water blocking coating 506. A layer of water blocking tape 508 surrounds the buffer tubes 502 which is surrounded by an outer HDPE sheath 510 having a plurality of rigid rod strength members 512.

The embodiments as shown in Figs. 9-20 illustrate the wide range of potential embodiments using the flexible reinforcement members 30,130 of Figs. 1-3 and 5-7 for use in optical fiber type communication cable systems. Of course, these members 30, 130 could be used in other systems as well, including, for example, copper communication cable systems.

The present invention offers many advantages over the prior art. Because the cable structures 300, 400, 500 having these reinforcement members 30, 130 are lighter than communications cables having traditional glass reinforcement members, installation of these cables within ducts in underground cable systems using known installation techniques such as blowing-in installation is possible, in which compressed air is used to install the cables within underground ducts. As one of skill in the art appreciates, the use of blowing-in installation is a cheaper, less time consuming, and gentler process for installing communication cables versus traditional installation techniques that utilize a winch and gripper to physically pull the cable through and into a duct.

Further, because these structures 300, 400, 500 are more flexible than communication cable structures requiring glass pultruded rods for strength, these structures 300, 400, 500 are more readily inserted around bends or corners in the ducts. Also, because the reinforcement members 30, 130 are stronger and have more rigidity or anti-buckling properties than traditional flexible reinforcement members, attenuation of the optical fibers is prevented due cable shrinkage or expansion during daily or seasonal thermal cycling. Bunching or jamming of the communication cables during installation is also prevented due to the ability to engineer the right amount of cable rigidity to prevent these installation problems.

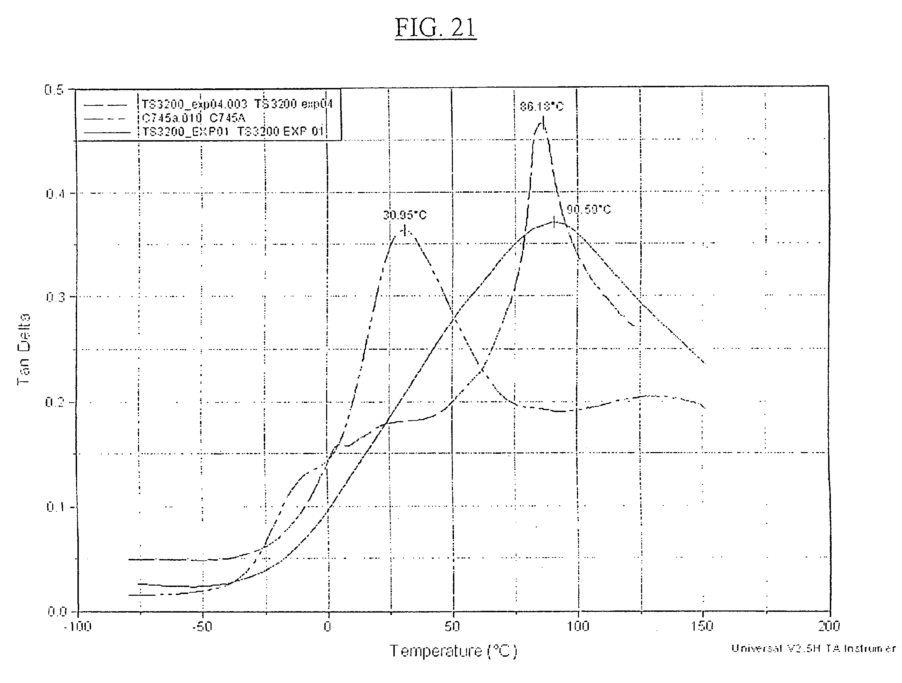

Fig. 21 is a comparative graph depicting glass transition temperatures of traditional coated reinforcements and the flexible coated reinforcements of the present invention. In particular, the glass transition temperature of traditional glass fibers coated with latex and acrylic wax is shown in comparison to glass transition temperatures of glass fibers coated with a low molecular weight mineral wax and an ethylene acrylic acid (EAA) topcoat and glass fibers coated with a low molecular weight mineral wax and ethylene vinyl acetate (EVA) topcoat.

As can be seen in Fig. 21, the standard thermoset CR745A flexible reinforcement has a glass transition temperature, Tg, of 30.96°. Tg is the temperature where an amorphous polymer transitions from a brittle, vitreous material to a more pliable, more flexible, softer material. In contrast to the standard reinforcement, the two thermoplastic-coated reinforcements have Tg's that are about 86° and 91°C, respectively. The higher Tg allows for a processable and more flexible reinforcement at the cable's upper range of the usual operating range of -40° to +80°C. In contrast the polymer transitions to a stiff matrix at the lower temperature range. Being able to control Tg by selective choice of thermoplastic materials or blends of such materials and appropriate modifiers allows for the reinforcement to be customized to precisely meet the cable's performance requirements. As the reinforcement transitions from a flexible to a rigid member, the cable is protected from shrinkage from the polyethylene or other jacketing material as the cable experiences temperature cycles. Uncontrolled shrinkage can cause optical fiber signal attenuation or catastrophic optical fiber breakage.

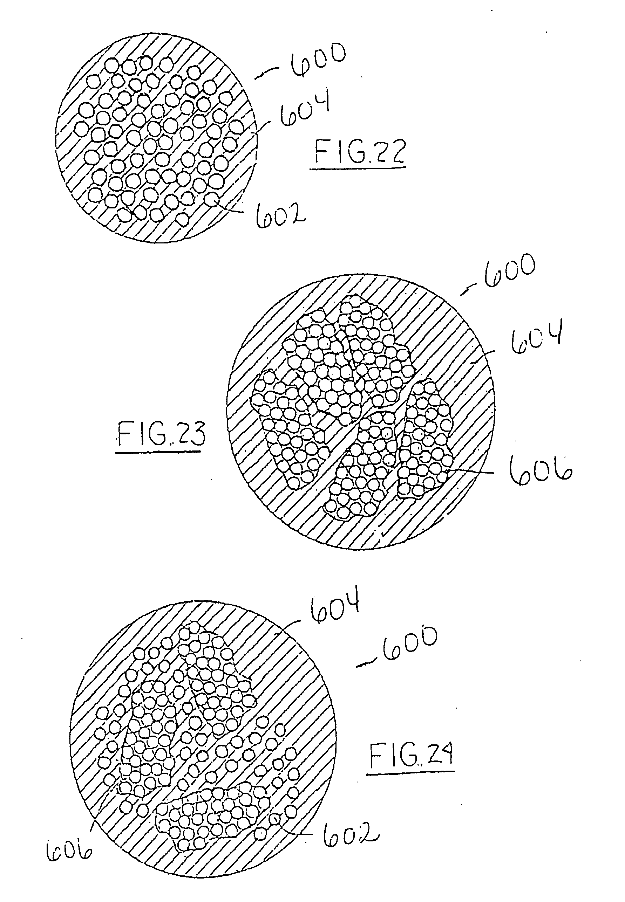

A second embodiment of the present invention is shown in Figs. 22-24 in which the fibers or bundles of the present invention are coated only with topcoat 604. This reduces manufacturing costs while still providing the reinforcement member with strong, flexible properties. In addition, the fiber or bundle is also softer and thus more conformable as it is wrapped around the cable core during cable manufacturing.

Fig. 22 illustrates a cross-sectional view of the flexible reinforcement member 600 according to a preferred embodiment of the present invention. The member 600 is comprised of a strand having a plurality of single filaments 602 of glass fibers coated with a higher molecular weight polymer topcoat 604.

Referring now to Fig. 23, another preferred embodiment shows the member 600 having a plurality of strand bundles 606 replacing the individual filaments 602. Also, Fig. 24 depicts the member 600 as having a combination of both filaments 602 and bundles 606. Again, in both Figs. 23 and 24, the fibers that comprise the filaments and/or bundles are coated only with topcoat 604.

The high molecular weight polymer topcoats used to coat the fiber or bundle are typically highly viscous and have difficulty penetrating the interstitial spaces between the fibers. However, some penetration will likely occur, typically in the range of about 10 to about 50 percent of the total weight of the member 30.

The topcoat 38 comprises between about 0.1 to about 35 percent, preferably between about 5 to about 20 percent and more preferably between about 10 to about 15 percent, of the total weight of the member 600.

As stated above, preferable topcoats include ethylene acrylic acid (EAA), ethylene methacrylic acid (EMAA) and ethylene vinyl acetate (EVA). Other topcoats which may be used include polyethylenes, polypropylenes, polyethylene copolymers, styrene-butadiene-styrenes, thermoplastics with elastomeric properties such as acrylonitrile butadiene-styrenes, polybutadiene terephthlate polyether glycols, polyamides, polyolefins and thermoplastic elastomers, thermoplastic polyesters, thermoplastic olefins, thermoplastic urethanes, fluoropolymers, polyvinyl chloride compounds and blends thereof. Higher modulus engineering thermoplastics which have mechanical, chemical and thermal properties, maintain dimensional stability, and are suitable for use under conditions of high impact, heat or moisture such as, acetals, polycarbonates, polyphenylene sulfides, polysulfones, modified polyphenylene oxides, polyimides, poly-amide-imides and blends thereof. These materials will provide rigid character to the reinforcement member 600, which is better suited for resisting thermal contraction of the communication cable during temperature cycling.

Water swellable superabsorbent polymer topcoats may also be used such as Cabloc 80HS or Cabloc 40HS manufactured by Stockhausen (Greensboro, NC), Technomelt 80-8254 (unfilled ethylene vinyl acetate; EVA) manufactured by Henkel (Elgin,IL), Primacor 59801 (ethylene acrylic acid; EAA) manufactured by The Dow Chemical Company (Midland, MI), Multiwax 180M (microcrystalline wax) manufactured by Witco Corporation (Petrolia, PA), and Macromelt Q4411-221 (EVA containing a superabsorbent polymer pre-compounded) manufactured by Henkel (Elgin, IL).

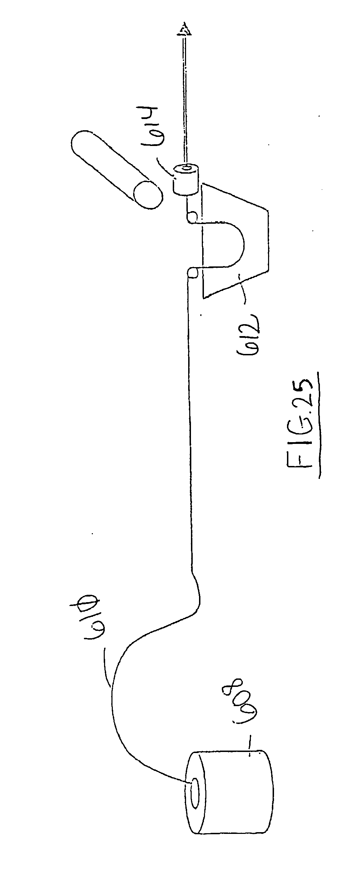

The topcoat may be applied using a variety of application techniques. Fig. 25 illustrates the process for making the members 600 of Figs. 22-24. The process begins by unrolling the fibers 610 from a reel 608. The fibers 610 represent filaments 602, bundles 606, or a combination of filaments 602 and bundles 606 as depicted in Figs. 22-24. The fibers 610 are introduced to an applicator 612 containing the topcoat 604. Preferably, the applicator 612, as shown here, is a Nordson hot melt applicator. The topcoat 604 enters the applicator 612 through an orifice (not shown) For Dow Primacor 5990I, which has a melt point index of 1300 grams per 10 minutes, the material is heated to approximately 125 degrees Celsius (257 degrees Fahrenheit) as it enters the fixed orifice through a thick hose (not shown) and applied to the fibers 610. The fibers 610 exit the applicator 612 and enter a second stripper die 614 having an inner diameter of approximately 1.12 millimeters (0.044 inches). The stripper die 614 removes excess topcoat 604 and smoothes the outer surface of the topcoat. The topcoat is then cooled to form the reinforcement member 600.

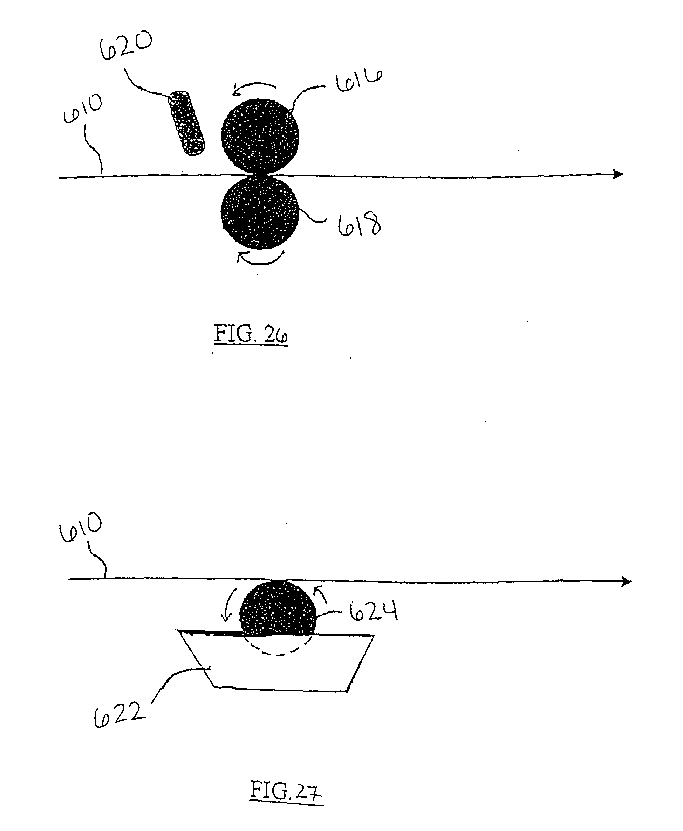

In another embodiment, shown in Fig. 26, the fiber 610 is coated by counter rotating rolls 616,618. Extruder 620 introduces topcoat 604 and the fiber 610 is then pulled between counter rotating rolls 616,1618. Roll 616 turns in a counter-clockwise direction and roll 618 turns in a clockwise direction (see arrows). The counter rotating rolls 616,618 provide a uniform coating of topcoat 604 to the fiber 610. The counter rotating rolls 616,618 provide a uniform coating of topcoat 604 to the fiber 610. The counter rotating roll helps the high viscosity topcoat to penetrate the interstitial spaces between the reinforcement filaments by applying pressure to the topcoat forcing it to impregnate the fibrous bundle of the reinforcement. Although the use of stripper dies can be used in conjunction with these two rolls, using rolls in this manner does not require the use of stripper dies. The rolls are maintained with a precise gap between them that, in effect, meter the amount of topcoat being applied to the strand, as well as remove the excess topcoat being applied. The topcoat is then cooled to form the reinforcement member 600.

In another embodiment, illustrated in Fig. 27, the fiber 610 is coated by a single counter-rotating roll 624. Roll 624 is positioned in topcoat reservoir 622 and turns in a counter-clockwise direction. The roll 624 picks up topcoat from the reservoir 622 as it turns and coats the fiber 610 as the fiber is pulled over the roller. The use of a roll in a counter rotating motion helps to open the fiber bundle and force the topcoat to penetrate the fiber. In this method, stripper dies would be useful to provide a means of removing the excess coating. However, stripper dies may not be necessary if the roll speed and topcoat film thickness are precisely controlled to, in effect, add a metered amount of topcoat to the strand. As above, the topcoat is cooled to form reinforcement member 600.

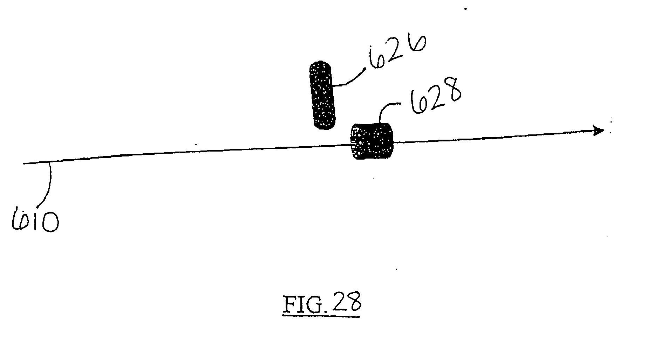

As shown in Fig. 28, an extruder 628 using a crosshead die 626 is used in place of the counter rotating rolls or single counter rotating roll to introduce the topcoat 604 to the fibers 610.

The fiber to be coated with topcoat may be an uncoated fiber, i.e., unsized fibers such as uncoated aramid, PBO, spectra or glass fibers that have been "undersized" and dried, heat cleaned or solvent washed, or may be precoated in an offline process. Precoated fibers may be coated with polymer coatings including thermoplastic coatings, sizing, finishes, waxes, curing agents, and conventional thermosetting resins including, but not limited to, epoxies, polyimide, vinyl esters and acrylics.

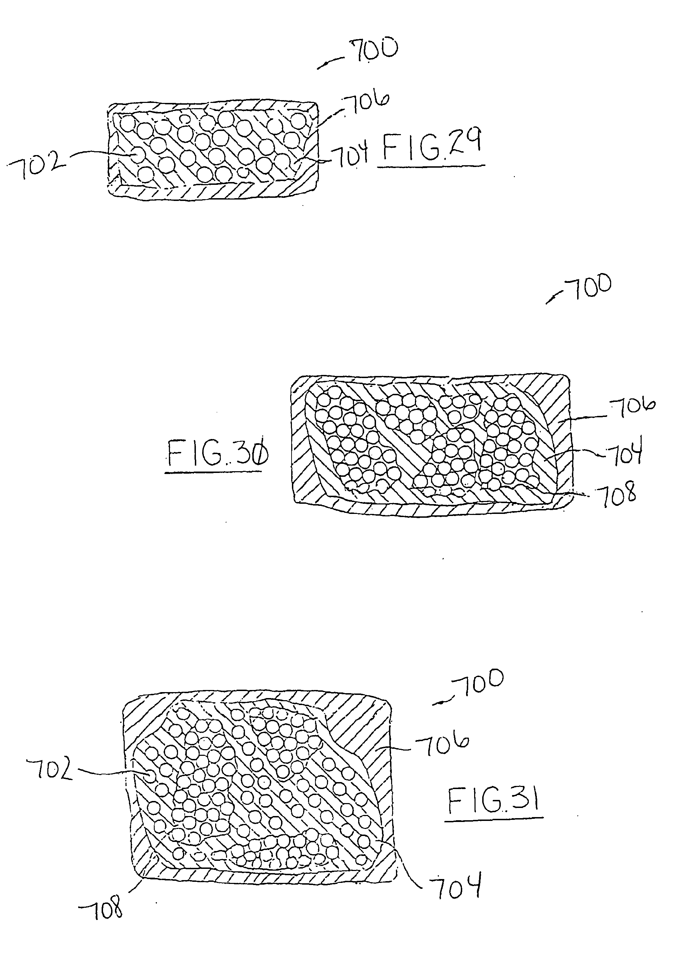

Figs. 29-31 depict a third embodiment of the present invention, the low profile flexible reinforcement member. Fig. 29 illustrates a cross-sectional view of the low profile flexible reinforcement member 700 according to a preferred embodiment of the present invention. The member 700 is comprised of a strand having a plurality of single filaments 702 of glass fibers saturated with a primary saturant 704 and coated with a higher molecular weight polymer topcoat 706.

Referring now to Fig. 30, another preferred embodiment shows the member 700 having a plurality of strand bundles 708 replacing the individual filaments 702. Fig. 31 depicts the member 700 as having a combination of both filaments 702 and bundles 708. Again, in both Figs. 30 and 31, the fibers that comprise the filaments and/or bundles are saturated with the primary saturant 704 and coated with the topcoat 706. Preferable primary saturants and topcoats are discussed above and are the same as those used in the first embodiment of the present invention.

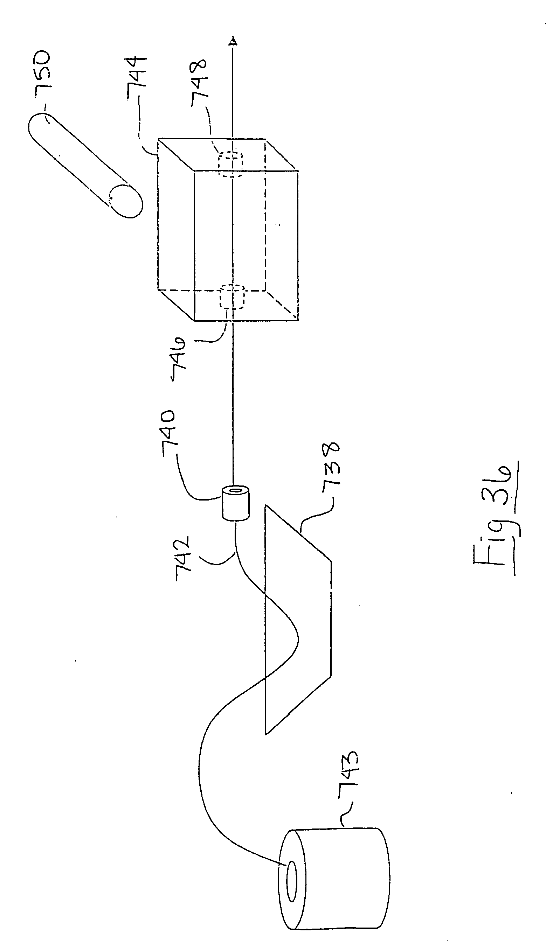

Fig. 36 illustrates process for making the reinforcement members using an extruder 750 and die box 744 to apply the topcoat 706. Fibers 742 are pulled from spool 743 and introduced to the saturant bath 738. The fibers 742 exit the bath 738 and are introduced to a stripper die 740. The fibers 742 are then introduced to topcoat applicator die box 744 containing the topcoat. The topcoat is introduced to die box 744 via extruder 750. The coated fibers 742 enter the die box 744 through slotted, tapered entrance die 746, topcoat is applied and the coated fibers 742 and the fibers exit the die box through tapered, slotted exit die 6748. The topcoat is then cooled to form the reinforcement member 700.

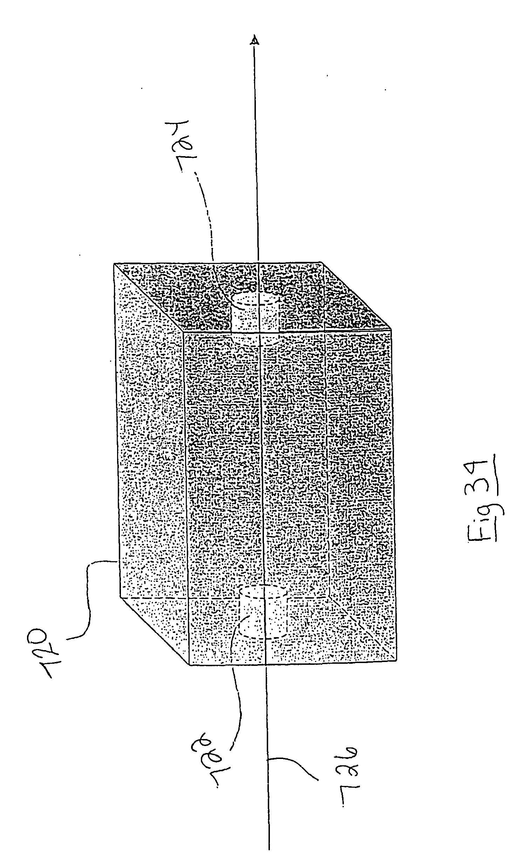

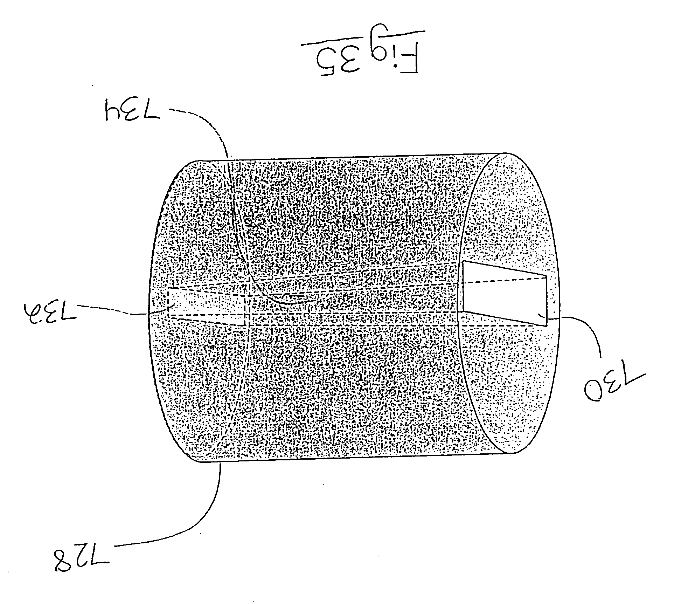

The low profile, flexible reinforcement is typically made using a slotted, tapered die 728 such as that shown in Fig. 35. The die 742 guides the coated fibers 742 through the die box (as shown in Fig. 34) as topcoat 706 is applied. As shown in Fig. 35, die 728 has a passageway 734 having an entrance 730 and exit 732 through which the coated fiber (not shown) passes. Typically the entrance 730 and exit 732 are "cupped" (not shown) to provide a smooth surface for the fiber to pass over as it enters and exits the die. The passageway 734 is tapered on all sides from the entrance 730 to the exit 732. Preferably, the degree of taper is from about 4% to about 6%. The die 738 has inner dimensions of 2.20 mm² x 0.50 mm² and an area of 1.15 mm² to form the low profile shape. As the coated fiber moves through the die 728 excess topcoat is removed. Passing the coated fibers over the tapered die forces the topcoat to intimately bond with the strand and gradually transitions the strand and topcoat to conform to a predominately flat configuration.

As shown in Fig. 35, entrance 730 of the die 728 has larger dimensions than exit 732. Further, the dimensions of the entrance and exits of the entrance die 746 are greater than the dimensions of the entrance and exits of the exit die 748 (Fig. 36). The variance in dimensions serves to guide the coated fibers through the die box 744. Die 746 "pre-shapes" or shapes the strand to an intermediary configuration aligning it prior to entering the exit die 748.

The slotted, tapered die (Fig. 35) is typically formed from stainless steel but may be made of any conventional material used in the art. The passageway 734 may contain an insert (not shown) made of a durable material to reduce wear of the die. The insert is typically constructed of tungsten carbide, ceramic, diamond, stainless steel or any conventional material used in the art.

Fig. 34 illustrates die box 720 which is used with an extruder 750 (Fig. 36) or other hot melt delivery device to introduce topcoat to the coated fibers 726. Fibers 726 enter the die box 720 through entrance die 722 after passing through stripper die 740, as discussed above (see Fig. 36). Although standard dies may be used with the die box it is preferable to use a slotted, tapered, die.

In the alternative, entrance die 722 may not be used and the coated fibers 726 pass through an opening (not shown) in the die box 720 where topcoat is applied. Fibers 726 then pass through exit die 724 which removes excess topcoat, smoothes the outer surface of the topcoat. The topcoat is then cooled to form the reinforcement member 700.

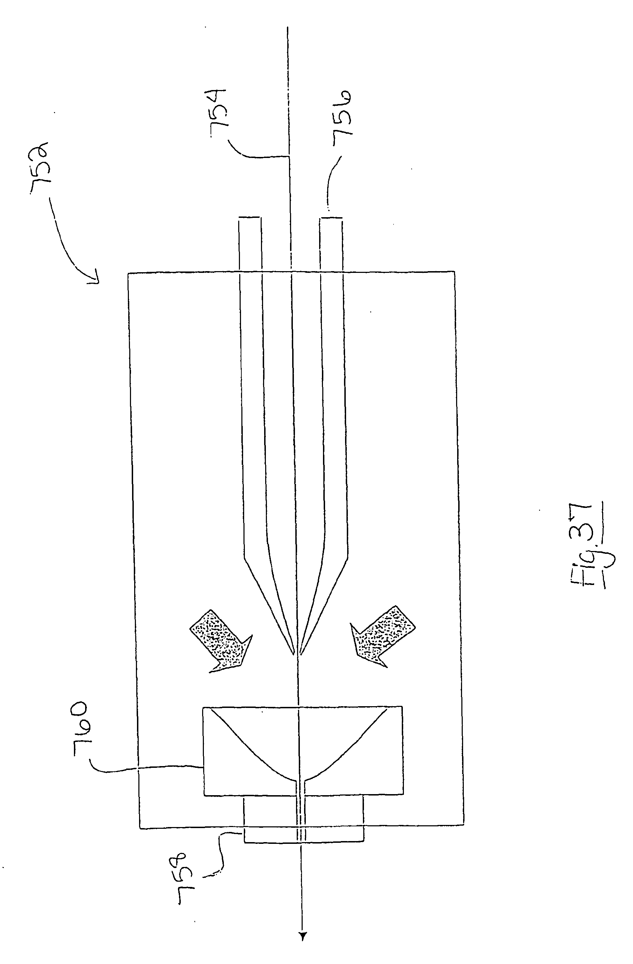

In the alternative and as shown in Fig. 37, a crosshead die 752 may be used to apply topcoat to the coated fibers. Coated fibers 754 are fed into the die 752 through a guide-tip 756. In order to maintain concentricity, the clearance between the coated fibers 754 and the tip 756 is minimal. As the coated fibers 754 are fed through the tip 756, topcoat within the crosshead die 752 is maintained under pressure as it flows around the coated fibers 754 (the flow of the topcoat is designated by arrows). The fibers 754 exit the die box through die 758. The topcoat is then cooled to form the reinforcement member. The function of the tip 756 inside a crosshead die tool is to align the member to be coated. Die 760 (located inside the crosshead die 752) serves to bring the coating material uniformly around the coated fibers 754 and gradually narrows in diameter to the final desired dimensions. By changing the relative location of the tip to the die, one can change the force by which the topcoat polymer is applied onto the substrate. Moving the tip further away from the die decreases pressure of the coating material onto the coated fibers. Whereas, moving the tip closer to the die increases pressure of the coating material onto the coated fibers. Other polymers, in addition to those mentioned above, that can be used with a crosshead die include polycarbonate (PC), acrylonitrile-butadiene-styrene terpolymer (ABS), and blends known as PC-ABS.

Various dies and tips may be used with the crosshead dies as known in the art, such as those manufactured by GENCA, A division of PN Tech LLC (Clearwater, FL) and Gill Corporation (West Warwick, RI). If it is preferable to manufacture a flat product, as described above, flat tips and dies may be used with the crosshead die.

The low profile flexible reinforcement members 700 of Figs. 29-31 are then available to be inserted into a communications cable by known techniques. Figs. 9-20 and 32-33 illustrate possible types of communications cables utilizing these low profile flexible reinforcement members 700. Each is described below.

Figs. 9-20 illustrate cable structures. Each of these structures 300 having the low profile, flexible reinforcement member 700, (as depicted as 30 or 130 in Figs. 9-20), offers increased strength and flexibility as compared to structures with traditional reinforcement members.

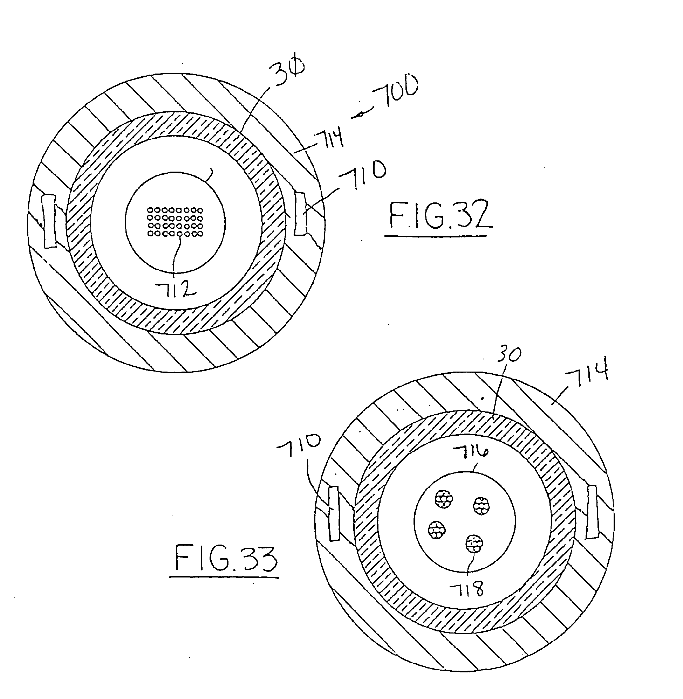

As shown in Fig. 32, the structure 701 comprises a gel-filled loose tube 716 having an optical fiber ribbon 712. The loose tube 716 is surrounded by the low profile, flexible reinforcement member 700 and covered with a high-density polyethylene ("HDPE") sheath 714. Also shown is a strength member 710, which could in this case be made by either the present invention or by conventional thermosetting processes. Fig. 33 illustrates a cable structure 703 showing the optical fiber ribbon 712 is replaced with a plurality of optical fiber bundles 718 contained within the gel filled loose tube 716.

The forth embodiment of the present invention is a rodent resistant, flexible reinforcement. The rodent resistant reinforcement resembles the flexible reinforcement as described in the first embodiment of the present invention (Figs. 1-3). The process by which the rodent resistant, flexible reinforcement is made is also the same (Figs. 4 and 8). The reinforcement is inserted into cables such as that depicted in Figs. 9-20, the flexible, rodent resistant reinforcement member being designated as 30.

However, the diameter of the filaments 32 (Fig. 1) is preferably between about 1 and about 89 microns, more preferably between about 15 and about 36 microns and most preferably between about 34 and about 36 microns. The large fiber diameter of the filaments acts to enhance the irritation capacity while the coating holds the irritating fibers in place, imbedded in the surface of the rodent's mouth, gums and lips. The chewy nature of the coating on the filaments and/or bundles will be tactilely displeasing to the rodent and discourage further chewing.

The rodent resistant reinforcement member may include other materials that would inhibit chewing by rodents, including but not limited to, steel, brass, copper, ceramic, rock wool or combinations thereof. Alternatively, to deter rodent chewing, the fibers may be coated with a particulate, sharp, abrasive material such as crushed ceramic, metal slivers, abrasive particles such as alumina, silica, sand stone, quartz, salts, diamond dust, iron pyrite flint, slate vermicalcite or other flaky rock particles, crushed glass, silicon carbide, abrasive bauxite, metallic shards or combinations thereof. The abrasive particles may be added to the primary saturant bath, sprayed on, or applied via a standard powder coating process. Alternatively, the particles may be applied to the fibers an off-line process.

In a fifth embodiment of the present invention, a water-swellable, flexible reinforcement is provided. The water-swellable, flexible reinforcement resembles the flexible reinforcement as described in the first embodiment of the present invention (Figs. 1-3). The filaments and/or bundles are constructed of the same materials as described above (first embodiment) and the primary saturant are also similar. However, topcoat 38 (Figs. 1-3) is a water-swellable topcoat (described below). The process by which the water-swellable, flexible reinforcement is made is also the same as described above (see Figs. 4 and 8). The water-swellable topcoat may also be applied using an extruder using a crosshead die or similar applicator apparatus. The reinforcement is inserted into cables such as that depicted in Figs. 9-20, the water-swellable, flexible reinforcement member being designated as 30.

In the fifth embodiment, a water-swellable topcoat is applied to the reinforcement member. The water swellable topcoat on the reinforcement member provides water protection capabilities to the optical fiber cable. A preferred water-swellable topcoat is an ethylene vinyl acetate (EVA) polymer such as Henkel Macromelt Q 4411-22 (Henkel Adhesives, Elgin, IL). Additionally, Henkel produces other similar grades with various amounts of superabsorbent particulate added to the polymer.

Blending the Q 4411-22 with another hot melt, non-water swellable grade, ethylene vinyl acetate hot melt such as Henkel 80-8254 significantly improves the coating uniformity of the hot melt. A 2:1.1 mixture of Q 4411-22 and 80-8254 lowers the total amount of superabsorbent particulate to less than 20% in the topcoat layer. This improves processing by lowering viscosity and the total amount of particulate as solid particulate suspended in the hot melt tends to interfere with efficient coating. Further, the coating is less abrasive and coats more smoothly. By blending the water-swellable material with the non water-swellable material decreases the tendency of the superabsorbent particles to drop to the applicator bottom and char against the hot lower surface.

Based on the total hot melt coating of about 25 wt.% organic on the glass, the percent of superabsorbent particles in the total coating using about a ratio of 50:50 microcrystalline wax saturant to a blend of Q 4411-22 and 80-8254 (at 2:1 ratio) is about 10 wt.% total superabsorbent powder on the member 30.

Other water-swellable polymers that may comprise the topcoat 38 include polyethylene (PE) or polypropylene (PP) polymers, or copolymers of PE and PP, available from manufacturers such as Dow Chemical, Shell, and Basell. Still further preferable water-swellable topcoats 38 include ethylene vinyl acetate (EVA)copolymers (Henkel Adhesives, Elgin, IL), block copolymers of polybutylene terepthalate (DuPont, Wilmington, DE), copolymers of long chain polyether glycols (Dow Chemical, Midland, MI), thermoplastic elastomers (GLS, Cary, IL), olefins (Shell, Houston, TX), urethanes (Franklin International, Columbus, OH), polypropylene, polyethylene (Dow Chemical, Midland, MI), polyurethane, low molecular weight mineral wax, polyacrylamides (Bayer, Leverkusen, Germany), and blends thereof.

Table 2 (below) lists the results of water absorbency for a reinforcement made per the above process. The total amount of coating on the glass strand was approximately 25%. Of that, about 50% was the microcrystalline wax saturant, and 50% was a blend of water-swellable polymer (Henkel Q 4411) and non water-swellable polymer (Henkel 80-8254). The blend in turn was comprised of 59 wt% Q 4411 and 41 wt% 80-8254. Thus, if there is about 30% SAP in the Q 4411, the amount of SAP in the topcoat only is about 17.7 wt %. The amount of SAP in the total coating of the original fiber bundle taken as a whole is about 8.8 wt%.

The percent water absorbency after one minute submersion in water for this product is about 121 % by weight of the entire original reinforcement. Furthermore, by placing the superabsorbent polymer hot melt at the surface of the strand, the material most effectively interacts with water. No superabsorbent powder is buried inside the matrix and "wasted" and thus not available for swelling.

**TABLE 2**

| Water Absorbency of Reinforcement Member Coated with Wax and Top coated with a 59/41 Blend of Henkel Q 4411/80-8254 (AFTER ONE MINUTE SUBMERSION) | | |
|---|---|---|
| Initial Wt (g) | Final Wt (g) | % Absorbance (by wt) |
| 410 | 868 | 111.7 |
| 548 | 1191 | 117.3 |
| 402 | 906 | 125.4 |
| 497 | 1042 | 109.7 |
| 423 | 1027 | 142.8 |

Even though the superabsorbent coating is enclosed by a top layer of hydrophobic wax, there are enough fractures in the this coating from processing to allow water to easily penetrate to the superabsorbent polymer and cause water swelling. As mentioned above, other hot melt, water-swellable topcoats can be used such as ethylene vinyl acetate (EVA), duPont Hytrel® block copolymers of polybutylene terephthalate and long-chain polyether glycols (GLS Kraton), or other thermoplastic elastomers (TPE) or thermoplastic olefins (TPO) or thermoplastic urethanes (TPU), polypropylene, polyethylene, or polyurethane.

The water absorbency of the strand pre-coated with a superabsorbent polymer, is shown in Table 3. As shown, the reinforcement picked up 413% of water by weight of original reinforcement after only 1 minute of submersion.

**TABLE 3**

| Water Absorbency of Reinforcement Member Pre-Coated with InstantDry™ Superabsorbent Coating and Top coated with Wax (AFTER ONE MINUTE SUBMERSION) | | |
|---|---|---|
| Initial Wt | Final Wt | % Absorbance (by wt) |
| 431 | 1939 | 349.7 |
| 407 | 1905 | 368.0 |
| 409 | 2438 | 496.1 |
| 415 | 2119 | 410.6 |
| 397 | 2138 | 438.5 |

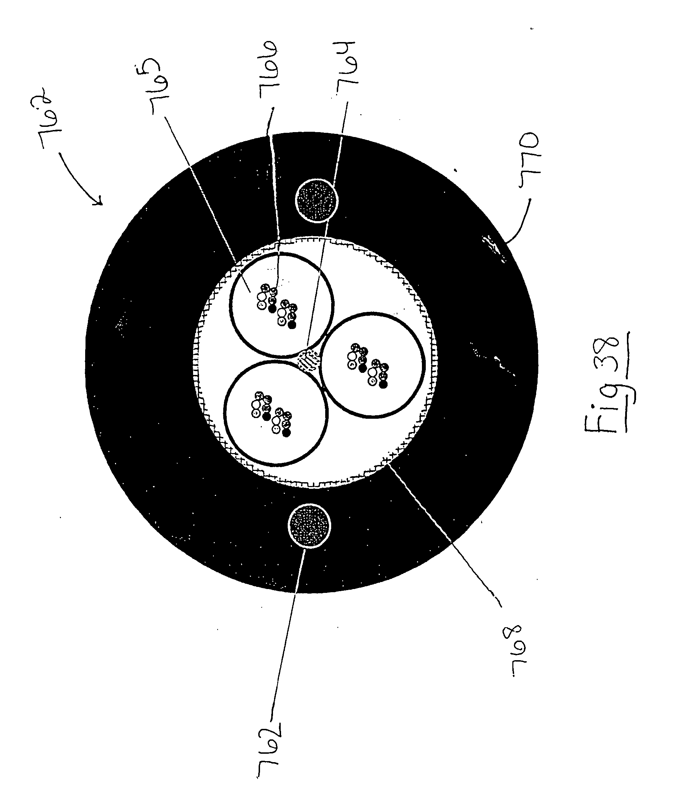

Fig. 38 illustrates cable structure 762 according to a preferred embodiment of the present invention. Cable structure 762 shows the water-swellable, flexible reinforcement member 764 positioned between three buffer tubes 765 containing optical fibers 766. The buffer tubes 765 are surrounded by water-blocking tape 768. The water-blocking tape 768 is surrounded by an outer HDPE sheath 770 having fiberglass reinforcing rods 762.

While the invention has been described in terms of preferred embodiments, it will be understood, of course, that the invention is not limited thereto since modifications may be made by those skilled in the art, particularly in light of the foregoing teachings.

### EMBODIMENTS OF THE DISCLOSURE

1. A flexible reinforcement member 30 for a communications cable comprising:
   a plurality of high modulus fibers 32;
   a primary saturant 36 coupled to said plurality of high modulus fibers 32, said primary saturant 36 having a melting point below approximately 300 degrees Celsius and a melt viscosity of less than approximately 1000 centipoise.
2. The flexible reinforcement member 30 of embodiment 1, wherein said primary saturant 36 has a melting point between about 100 to about 150 degrees Celsius and a melt viscosity of less than 500 centipoise.
3. The flexible reinforcement member 30 of embodiment 1, wherein said plurality of high modulus fibers 32 comprises a plurality of sized high modulus fibers selected from the group consisting of a plurality of sized or unsized aramid fibers and a plurality of sized or unsized poly(p-phenylene-2,6-benzobisoxazole) (PBO) fibers and a plurality of sized or unsized carbon fibers and a plurality of sized or unsized high silica glass and sized or unsized high tenacity, linearized polyethylene fiber.
4. The flexible reinforcement member 30 of embodiment 1, wherein said plurality of high modulus fibers 32 comprises a plurality of glass fiber strands.
5. The flexible reinforcement member 30 of embodiment 4, wherein said plurality of glass fiber strands comprises at least one glass fiber bundle 34, each of said at least one glass fiber bundle comprising a plurality of glass fiber filaments 32.
6. The flexible reinforcement member 30 of embodiment 2, wherein said plurality of glass fiber strands comprises a plurality of glass fiber filaments 32 and at least one glass fiber bundle 34, each of said at least one glass fiber bundle 34comprising a plurality of glass fiber filaments 32.
7. The flexible reinforcement member 30 of embodiment 1, wherein said primary saturant 36 comprises a low molecular weight mineral wax.
8. The flexible reinforcement member 30 of embodiment 7, wherein said low molecular weight mineral wax is selected from the group consisting of a low molecular weight microcrystalline wax, a low molecular weight polyalphaolefin wax, a low molecular weight polyethylene wax, or a modified (oxidized or maleated) polyolefin such as polyethylene or polypropylene, and blends thereof.
9. The flexible reinforcement member 30 of embodiment 1, wherein said primary saturant 36 comprises a blend of a low molecular weight microcrystalline wax and a styrene butadiene rubber, wherein said blend is between approximately 0.1 and 99.9 percent by weight of said low molecular weight microcrystalline wax and between approximately 0.1 and 99.9 percent by weight of said styrene butadiene rubber.
10. The flexible reinforcement member 30 of embodiment 9, wherein said blend comprises a 50/50 by weight blend of said low molecular weight microcrystalline wax and said styrene butadiene rubber.
11. The flexible reinforcement member 30 of embodiment 4, wherein said plurality
   of glass fiber strands 32 comprises a plurality of sized glass fiber strands selected from the group consisting of a plurality of sized or unsized E-type glass fiber strands and a plurality of sized or unsized ECR-type glass fibers.
12. The flexible reinforcement member 30 of embodiment further comprising a higher molecular weight polymer topcoat 38 coupled to said primary saturant 36.
13. The flexible reinforcement member 30 of embodiment 12, wherein said primary saturant 36 comprises approximately 0.1 and 35 percent of the total weight of said flexible reinforcement member 30 and wherein said high molecular weight polymer topcoat 38 comprises between approximately 0.1 and 35 percent of the total weight of said flexible reinforcement member 30.
14. The flexible reinforcement member 30 of embodiment 13, wherein said primary saturant 36 comprises approximately 5 and 20 percent of the total weight of said flexible reinforcement member 30 and wherein said high molecular weight polymer topcoat 38 comprises between approximately 5 and 20 percent of the total weight of said flexible reinforcement member 30.
15. The flexible reinforcement member 30 of embodiment 13, wherein said primary saturant 36 comprises approximately 10 and 15 percent of the total weight of said flexible reinforcement member 30 and wherein said high molecular weight polymer topcoat 38 comprises between approximately 10 and 15 percent of the total weight of said flexible reinforcement member 30.
16. The flexible reinforcement member 30 of embodiment 12, wherein said high molecular weight polymer topcoat 38 is selected from the group consisting of a high molecular weight polyethylene topcoat, a high molecular weight polypropylene topcoat, a high molecular weight ethylene acrylic acid topcoat, a high molecular weight polypropylene and polyethylene copolymer topcoat, an ethylene vinyl acetate copolymer topcoat, a styrene-butadiene-styrene topcoat, a polybutadiene terephthlate polyether glycol topcoat, polyamide, polyolefins and thermoplastic elastomers, and blends thereof.
17. The flexible reinforcement member 30 of embodiment 16, wherein the glass transition temperature (Tg) of said flexible reinforcement is greater than about 40°C.
18. The flexible reinforcement member 30 of embodiment 16 wherein the adhesion of glass to polyethylene is greater than about 46 pounds of force per 0.5 inches of embedded strand.
19. The flexible reinforcement member 30 of embodiments 12, wherein said high molecular weight polymer topcoat 38 comprises an ethylene acrylic acid polymer topcoat.
20. A method for forming a flexible reinforcement member 30 for use in a communications cable, the method comprising:
   providing a high modulus fiber material 32, said fiber material selected from the group consisting of a plurality of sized or unsized aramid fibers and a plurality of sized or unsized poly(p-phenylene-2,6-benzobisoxazole) (PBO) fibers and sized or unsized carbon fibers or sized or unsized high tenacity, linearized polyethylene fiber;
   coating said fiber material with a low molecular weight primary saturant 36, said low molecular weight primary saturant 36 having a melting point below approximately 300 degrees Celsius and a melt viscosity of less than approximately 1000 centipoise, wherein the weight of said low molecular weight primary saturant 36 on said fiber material comprises between 0.1 and 35 percent of the flexible reinforcement member 30.
21. The method of embodiment 20, wherein coating said fiber material 32 comprises:
   introducing a low molecular weight primary saturant 36 to an application device 154;
   melting said low molecular weight primary saturant 36 within said application device 154 at a temperature sufficient to maintain said low molecular weight primary saturant 36 at a viscosity of approximately less than about 1000 centipoise;
   introducing said fiber material 32 to said application device to coat said low molecular weight primary saturant 36 onto said fiber material 32 to form a coated member 150;
   removing said coated member 150 from said application device 154;
   introducing said coated member 150 to a stripper die 156 to remove an excess of said low molecular weight primary saturant 36 from said fiber material;
   cooling said coated member 150 to form the flexible reinforcement member 30,
   wherein the weight of said low molecular weight primary saturant 36 on said fiber material comprises between 10 and 35 percent of the flexible reinforcement member 30.
22. The method of embodiment 21, wherein introducing a low molecular weight primary saturant 36 to an application device 154 comprises introducing a low molecular weight primary saturant 36 to an application device 154, said low molecular weight primary saturant 36 comprising a blend of a low molecular weight microcrystalline wax and a styrene butadiene rubber material, wherein said blend is between approximately 0.1 and 99.9 percent by weight of said low molecular weight microcrystalline wax and between approximately 0.1 and 99.9 percent by weight of said styrene butadiene rubber.
23. The method of embodiment 21, wherein introducing a low molecular weight primary saturant 36 to an application device 154 comprises introducing a low molecular weight primary saturant 36 to an immersion bath.
24. The method of embodiment 20 further comprising introducing a high molecular weight polymer topcoat 38 onto said low molecular weight primary saturant 36.
25. The method of embodiment 24, wherein introducing said fiber material 32 to said application device and introducing a high molecular weight polymer topcoat onto said primary saturant comprises:
   introducing a low molecular weight primary saturant 36 to a first application device 54;
   melting said low molecular weight primary saturant 36 within said first application device 54 at a temperature sufficient to maintain said low molecular weight primary saturant 36 at a viscosity of less than about 1000 centipoise;
   introducing said fiber material 32 to said first application device 54 to coat said low molecular weight primary saturant 36 onto said fiber material 32 to form a coated member 50;
   removing said coated member 50 from said first application device 54;
   introducing said coated member 50 to a stripper die 56 to remove an excess of said low molecular weight primary saturant 36 from said fiber material 32;
   introducing said coated member 50 to a high molecular weight topcoat material 38 contained within second application device 58 to form a topcoated member;
   removing said topcoated member from said second application device 58;
   introducing said topcoated member to a second stripper die 60 to remove an excess of said high molecular weight topcoat 38 material from said topcoated member; and
   cooling said topcoated member to form the flexible reinforcement member 30, wherein the weight of said low molecular weight primary saturant 36 on said fiber material comprises between 10 and 35 percent of the flexible reinforcement member 30 and wherein the weight of said high molecular topcoat material 38 comprises between approximately 1 and 25 percent of the flexible reinforcement member 30.
26. The method of embodiment 23, wherein introducing a low molecular weight primary saturant 36 to a first application device 54 and introducing said coated member 50 to a high molecular weight topcoated member contained within a second application device 58 comprises:
   introducing a low molecular weight primary saturant 36 to first application device 54, said primary saturant 36 comprising a low molecular weight mineral wax selected from the group consisting of a low molecular weight microcrystalline wax, a low molecular weight polyalphaolefin wax, a low molecular weight polyethylene wax, a low molecular weight polyethylene wax, a low molecular weight maleated polypropylene polymer and blends thereof; and
   introducing said coated member 50 to a high molecular weight topcoat material 38 contained within second application 58 device to form a topcoated member, said high molecular weight topcoated material 38 selected from the group consisting of a high molecular weight polyethylene topcoat, a high molecular weight polypropylene topcoat, a high molecular weight ethylene acrylic acid topcoat, a high molecular weight polypropylene and polyethylene copolymer topcoat, an ethylene vinyl acetate copolymer topcoat, a styrene-butadiene-styrene topcoat, polyamide topcoat and a polybutadiene terephthlate polyether glycol topcoat and blends thereof.
27. A method for improving strand integrity and decreasing water penetration and fiber-fiber abrasion in the high modulus fibers, in the form of strands and bundles, that comprise a flexible reinforcement material used in communications cables, the method comprising:
   introducing a low molecular weight thermoplastic material to the high modulus fibers that penetrates the interstices of the fibers, wherein said low molecular weight thermoplastic material comprises between approximately 10 and 35 percent of the total weight of the flexible reinforcement material 30.
28. The method of embodiment 27, wherein introducing a low molecular weight thermoplastic material comprises introducing a low molecular weight mineral wax to the high modulus fibers that penetrates the interstices of the high modulus fibers, wherein said low molecular weight mineral wax comprises between approximately 10 and 35 percent of the total weight of the flexible reinforcement material 30.
29. The method of embodiment 27, wherein introducing a low molecular weight thermoplastic material comprises introducing a low molecular weight microcyrstalline wax to the high modulus fibers that penetrates the interstices of the high modulus fibers, wherein said low molecular weight microcrystalline wax comprises between approximately 10 and 35 percent of the total weight of the flexible reinforcement material 30.
30. The method of embodiment 27, wherein introducing a low molecular weight thermoplastic material comprises introducing a blend of a low molecular weight mineral wax and a styrene butadiene rubber compound to the high modulus fibers that penetrates the interstices of the high modulus fibers, wherein said blend comprises between approximately 10 and 35 percent of the total weight of the flexible reinforcement material 30.
31. A flexible reinforcement member 600 for a communications cable comprising:
   a plurality of high modulus fibers 602;
   a high molecular weight topcoat 604 coupled to said fibers 602.
32. The flexible reinforcement member 600 of embodiment 31, wherein said plurality of high modulus fibers comprises a plurality of sized high modulus fibers selected from the group consisting of a plurality of sized or unsized aramid fibers and a plurality of sized or unsized poly(p-phenylene-2,6-benzobisoxazole) (PBO) fibers and a plurality of sized or unsized carbon fibers and a plurality of sized or unsized high silica glass and sized or unsized high tenacity, linearized polyethylene fiber.
33. The flexible reinforcement member 600 of embodiment 31, wherein said plurality of high modulus fibers 602 comprises a plurality of glass fiber strands 602.
34. The flexible reinforcement member 600 of embodiment 33, wherein said plurality of glass fiber strands 602 comprises at least one glass fiber bundle 606, each of said at least one glass fiber bundle 606 comprising a plurality of glass fiber filaments 602.
35. The flexible reinforcement member 600 of embodiment 32, wherein said plurality of glass fiber strands 602 comprises a plurality of glass fiber filaments 602 and at least one glass fiber bundle 606, each of said at least one glass fiber bundle 606 comprising a plurality of glass fiber filaments 602.
36. The flexible reinforcement member 600 of embodiment 34, wherein said plurality of glass fiber strands 602 comprises a plurality of sized glass fiber strands selected from the group consisting of a plurality of sized or unsized E-type glass fiber strands and a plurality of sized or unsized ECR-type glass fibers.
37. The flexible reinforcement member 600 of embodiment 31, wherein said high molecular weight polymer topcoat 604 comprises between about 0.1 to about 35 percent of the total weight of said flexible reinforcement member 600.
38. The flexible reinforcement member 600 of embodiment 37, wherein said high molecular weight polymer topcoat 604 comprises between about 5 to about 20 percent of the total weight of said flexible reinforcement member 600.
39. The flexible reinforcement member 600 of embodiment 38, wherein said high molecular weight polymer topcoat 604 comprises between about 10 to about 15 percent of the total weight of said flexible reinforcement member 600.
40. The flexible reinforcement member 600 of embodiment 31, wherein said high molecular weight polymer topcoat 604 is selected from the group consisting of a high molecular weight polyethylene, a high molecular weight polypropylene, a high molecular weight ethylene acrylic acid, a high molecular weight polypropylene, a high molecular weight polyethylene copolymer, an ethylene vinyl acetate copolymer, a styrene-butadiene-styrene, an acrylonitrile butadiene-styrene, a polybutadiene terephthlate polyether glycol, polyamides, polyolefins and thermoplastic elastomers, thermoplastic polyesters, thermoplastic olefins, thermoplastic urethanes, fluoropolymers, polyvinyl chloride compounds, acetals, polycarbonates, polyphenylene sulfides, polysulfones, modified polyphenylene oxides, polyimides, poly-amide-imides and blends thereof.
41. The flexible reinforcement member 600 of embodiment 31 wherein said high molecular polymer topcoat 604 is selected from the group consisting of superabsorbent polymers.
42. The flexible reinforcement member 600 of embodiment 41, wherein said high molecular weight polymer topcoat 604 is selected from the group consisting of microcrystalline wax.
43. The flexible reinforcement member 600 of embodiment 31, wherein said high molecular weight polymer topcoat 604 comprises an ethylene acrylic acid polymer topcoat.
44. The flexible reinforcement member 600 of embodiment 31, wherein said
   high modulus fibers further comprise a coating.
45. The flexible reinforcement member 600 of embodiment 44, wherein said coating is selected from the group consisting of a polymer coating including thermoplastic coatings, a sizing, a finish, a blend of a low molecular weight microcrystalline wax and a styrene butadiene rubber,
   a low molecular weight microcrystalline wax, a low molecular weight polyalphaolefin wax, a low molecular weight polyethylene wax, a modified (oxidized or maleated) polyolefin such as polyethylene or polypropylene, and blends thereof.
46. The flexible reinforcement member 600 of embodiment 40, wherein the adhesion of glass to polyethylene is greater than about 46 pounds of force per 0.5 inches of embedded strand.
47. A method for forming a flexible reinforcement member 600 for use in a communications cable, the method comprising:
   a) providing a high modulus fiber material 602, said fiber material
      selected from the group consisting of a plurality of sized or unsized aramid fibers and a plurality of sized or unsized poly(p-phenylene-2,6-benzobisoxazole) (PBO) fibers and sized or unsized carbon fibers or sized or unsized high tenacity, linearized polyethylene fiber;
   b) coating said fiber material 602 with a high molecular weight topcoat 604, said high molecular weight topcoat 604 having a melting point below approximately 300°C, wherein the weight of said high molecular weight topcoat on said fiber material comprises between about 1 percent to about 15 percent of the flexible reinforcement member 600.
48. The method of embodiment 47, wherein coating said fiber material 602 comprises:
   a) introducing a high molecular weight topcoat 604 to an application device 612;
   b) melting said high molecular weight topcoat 604 within said application device 612 at a temperature sufficient to maintain said high molecular weight;
   c) introducing said fiber material 602 to said application device to coat said high molecular weight topcoat 604 onto said fiber material to form a coated member 610;
   d) removing said coated member 610 from said application device 612; and
   e) cooling said coated member 610 to form the flexible reinforcement member 600,
   wherein the weight of said high molecular weight topcoat 604 on said fiber material comprises between about 1 to about 15 percent of the flexible reinforcement member 600.
49. The method of embodiment 48, further comprising the step of introducing said coated member 610 to a stripper die 614 to remove an excess of said high molecular weight topcoat 604 from said fiber material after step d) and preceding step e).
50. The method of embodiment 48, wherein introducing a high molecular weight topcoat 604 to said application device 612 to coat said high molecular weight topcoat 604 onto said fiber material 602 comprises introducing a high molecular weight topcoat 604 to said fiber via an immersion bath.
51. The method of embodiment 48, wherein introducing a high molecular weight topcoat 604 to an application device 612 to coat said high molecular weight topcoat 604 onto said fiber 602 comprises introducing a high molecular weight topcoat 604 to said fiber via a pair of counter rotating rollers 616, 618 via an extruder 620.
52. The method of embodiment 48, wherein introducing a high molecular weight topcoat 604 to an application device 612 to coat said high molecular weight topcoat 604 onto said fibers 6022comprises introducing a high molecular weight topcoat 604 to said fiber via a single rotating roller 624.
53. The method of embodiment 48, wherein said high molecular weight topcoat 604 is selected from the group consisting of a high molecular weight polyethylene, a high molecular weight polypropylene, a high molecular weight ethylene acrylic acid, a high molecular weight ethylene methacrylic acid, a high molecular weight polypropylene, a high molecular weight polyethylene copolymer, an ethylene vinyl acetate copolymer, a styrene-butadiene-styrene, an acrylonitrile butadiene-styrene, a polybutadiene terephthlate polyether glycol, polyamides, polyolefins and thermoplastic elastomers, thermoplastic polyesters, thermoplastic olefins, thermoplastic urethanes, fluoropolymers, polyvinyl chloride compounds, acetals, polycarbonates, polyphenylene sulfides, polysulfones, modified polyphenylene oxides, polyimides, poly-amide-imides and blends thereof.
54. The method of embodiment 48, wherein said high molecular polymer topcoat 604is selected from the group consisting of superabsorbent polymers.
55. The method of embodiment 48, wherein said high molecular weight polymer topcoat is selected from the group consisting of microcrystalline wax.
56. The method of embodiment 48, wherein said high molecular weight polymer topcoat comprises an ethylene acrylic acid polymer topcoat.
57. The method of embodiment 48, wherein said high modulus fibers 602 further comprise a coating.
58. The method of embodiment 48, wherein said coating is selected from the group consisting of a polymer coating including thermoplastic coatings, a sizing, a finish, a blend of a low molecular weight microcrystalline wax and a styrene butadiene rubber, a low molecular weight microcrystalline wax, a low molecular weight polyalphaolefin wax, a low molecular weight polyethylene wax, a modified (oxidized or maleated) polyolefin such as polyethylene or polypropylene, and blends thereof.
59. The method of embodiment 48, wherein the adhesion of glass to polyethylene is greater than about 46 pounds of force per 0.5 inches of embedded strand.
60. A low profile low profile flexible reinforcement member 700 for a communications cable comprising:
   a plurality of high modulus fibers 702;
   a primary saturant 704 coupled to said plurality of high modulus fibers 702, said primary saturant 704 having a melting point below approximately 300 degrees Celsius and a melt viscosity of less than approximately 1000 centipoise;
   a higher molecular weight polymer topcoat 706 coupled to said primary saturant 704;
   wherein said reinforcement member 700 is a low profile reinforcement.
61. The low profile flexible reinforcement member 700 of embodiment wherein said primary saturant 704 has a melting point between about 100 to about 150 degrees Celsius and a melt viscosity of less than 500 centipoise.
62. The low profile flexible reinforcement member 700 of embodiment 60, wherein said plurality of high modulus fibers 702 comprises a plurality of sized high modulus fibers selected from the group consisting of a plurality of sized or unsized aramid fibers and a plurality of sized or unsized poly(p-phenylene-2,6-benzobisoxazole) (PBO) fibers and a plurality of sized or unsized carbon fibers and a plurality of sized or unsized high silica glass and sized or unsized high tenacity, linearized polyethylene fiber.
63. The low profile flexible reinforcement member 700 of embodiment 60, wherein said plurality of high modulus fibers 702 comprises a plurality of glass fiber strands 702.
64. The low profile flexible reinforcement member 700 of embodiment 63, wherein said plurality of glass fiber strands 702 comprises at least one glass fiber bundle 708, each of said at least one glass fiber bundle 708 comprising a plurality of glass fiber filaments 702.
65. The low profile flexible reinforcement member 700 of embodiment 61, wherein said plurality of glass fiber strands 702 comprises a plurality of glass fiber filaments 702 and at least one glass fiber bundle 708, each of said at least one glass fiber bundle 708 comprising a plurality of glass fiber filaments 702.
66. The low profile flexible reinforcement member 700 of embodiment 60, wherein said primary saturant 704 comprises a low molecular weight mineral wax.
67. The low profile flexible reinforcement member 700 of embodiment 66, wherein said low molecular weight mineral wax is selected from the group consisting of a low molecular weight microcrystalline wax, a low molecular weight polyalphaolefin wax, a low molecular weight polyethylene wax, or a modified (oxidized or maleated) polyolefin such as polyethylene or polypropylene, and blends thereof.
68. The low profile flexible reinforcement member 700 of embodiment 60, wherein said primary saturant comprises a blend of a low molecular weight microcrystalline wax and a styrene butadiene rubber, wherein said blend is between approximately 0.1 and 99.9 percent by weight of said low molecular weight microcrystalline wax and between approximately 0.1 and 99.9 percent by weight of said styrene butadiene rubber.
69. The low profile flexible reinforcement member 700 of embodiment 68, wherein said blend comprises a 50/50 by weight blend of said low molecular weight microcrystalline wax and said styrene butadiene rubber.
70. The low profile flexible reinforcement member 700 of embodiment 63, wherein said plurality of glass fiber strands 702 comprises a plurality of sized glass fiber strands selected from the group consisting of a plurality of sized or unsized E-type glass fiber strands and a plurality of sized or unsized ECR-type glass fibers.
71. The low profile flexible reinforcement member 700 of embodiment 60, wherein said primary saturant 704 comprises approximately 0.1 and 35 percent of the total weight of said low profile flexible reinforcement member 700 and wherein said high molecular weight polymer topcoat comprises between approximately 0.1 and 35 percent of the total weight of said low profile flexible reinforcement member 700.
72. The low profile flexible reinforcement member 700 of embodiment 71, wherein said primary saturant comprises 704 approximately 5 and 20 percent of the total weight of said low profile flexible reinforcement member 700 and wherein said high molecular weight polymer topcoat 706 comprises between approximately 5 and 20 percent of the total weight of said low profile flexible reinforcement member 700.
73. The low profile flexible reinforcement member 700 of embodiment 71, wherein said primary saturant 704 comprises approximately 10 and 15 percent of the total weight of said low profile flexible reinforcement member 700 and wherein said high molecular weight polymer topcoat 706 comprises between approximately 10 and 15 percent of the total weight of said low profile flexible reinforcement member 700.
74. The low profile flexible reinforcement member 700 of embodiment 60, wherein said high molecular weight polymer topcoat 706 is selected from the group consisting of a high molecular weight polyethylene topcoat, a high molecular weight polypropylene topcoat, a high molecular weight ethylene acrylic acid topcoat, a high molecular weight polypropylene and polyethylene copolymer topcoat, an ethylene vinyl acetate copolymer topcoat, a styrene-butadiene-styrene topcoat, a polybutadiene terephthlate polyether glycol topcoat, polyamide, polyolefins and thermoplastic elastomers, and blends thereof.
75. The low profile flexible reinforcement member 700 of embodiment 74, wherein the glass transition temperature (Tg) of said low profile flexible reinforcement member 700 is greater than about 40°C.
76. The low profile flexible reinforcement member 700 of embodiment 74, wherein the adhesion of glass to polyethylene is greater than about 46 pounds of force per 0.5 inches of embedded strand.
77. The low profile flexible reinforcement member 700 of embodiment 60, wherein said high molecular weight polymer topcoat 706 comprises an ethylene acrylic acid polymer topcoat.
78. A method for forming a low profile flexible reinforcement member 700 for use in a communications cable, the method comprising the steps of:
   a) introducing a low molecular weight primary saturant 704 to a first application device 738;
   b) melting said low molecular weight primary saturant 704 within said first application 738 device at a temperature sufficient to maintain said low molecular weight primary saturant 704 at a viscosity of less than about 1000 centipoise;
   c) introducing said fiber material 702 to said first application device to coat said low molecular weight primary saturant 704 onto said fiber material 702 to form a coated member 742;
   d) removing said coated member 742 from said first application device 738;
   e) introducing said coated member 742 to a first stripper die 740 to remove an excess of said low molecular weight primary saturant 704 from said fiber material 702;
   f) introducing said coated member 742 to a high molecular weight topcoat material 706 contained within a second application device 744 to form a topcoated member;
   g) removing said topcoated member from said second application device;
   h) introducing said topcoated member to a second stripper die 728 to remove an excess of said high molecular weight topcoat material 704 from said topcoated member; and
   i) cooling said topcoated member to form the low profile flexible reinforcement member 700, wherein the weight of said low molecular weight primary saturant 704 on said fiber material comprises between 10 and 35 percent of the low profile flexible reinforcement member 700 and wherein the weight of said high molecular topcoat material 706 comprises between approximately 1 and 25 percent of the low profile flexible reinforcement member 700.
79. The method of embodiment 78, wherein said step of introducing said coated member to a high molecular weight topcoat material 706 contained within second application device includes introducing said coated member to a die box 744.
80. The method of embodiment 79, wherein said wherein said step of introducing said coated member 742 to a high molecular weight topcoat material 706 contained within second application device includes introducing said coated member 742 to said second flat, slotted stripper die 728 located within said die box 744.
81. The method of embodiment 78, further comprising the step of introducing said coated member to a flat, slotted entrance die 722 prior to introducing said coated member 742 to a high molecular weight topcoat material 706.
82. The method of embodiment 78, wherein introducing a low molecular weight primary saturant 704 to a first application device 738 and introducing said coated member to a high molecular weight topcoated member 742 contained within a second application device comprises:
   introducing a low molecular weight primary saturant 704 to first application device 738, said primary saturant 704 comprising a low molecular weight mineral wax selected from the group consisting of a low molecular weight microcrystalline wax, a low molecular weight polyalphaolefin wax, a low molecular weight polyethylene wax, a low molecular weight polyethylene wax, a low molecular weight maleated polypropylene polymer and blends thereof; and
   introducing said coated member 742 to a high molecular weight topcoat material 706 contained within second application device to form a topcoated member 742, said high molecular weight topcoated material 706 selected from the group consisting of a high molecular weight polyethylene topcoat, a high molecular weight polypropylene topcoat, a high molecular weight ethylene acrylic acid topcoat, a high molecular weight polypropylene and polyethylene copolymer topcoat, an ethylene vinyl acetate copolymer topcoat, a styrene-butadiene-styrene topcoat, polyamide topcoat and a polybutadiene terephthlate polyether glycol topcoat and blends thereof.
83. The low profile flexible reinforcement member 700 of embodiment 78, wherein said reinforcement member 700 has a cross section defined by an x-axis and a y-axis wherein the length along the x-axis is substantially greater than the length along the y-axis.
84. The method of claim 78, wherein said step of introducing said topcoated member 742 to a second slotted, tapered stripper die 728 includes introducing said topcoated member 742 to a slotted, tapered stripper die 728 comprising a passageway 734 having and entrance 730 and an exit 732 that is tapered on all sides, from the entrance to exit, at a degree from about 4% to about 6%.
85. A flexible, rodent resistant reinforcement member 30 for a communications cable comprising:
   a plurality of high modulus fibers 32 wherein the diameter of said fibers 32 is between about 1 and 89 microns;
   a primary saturant 36 coupled to said plurality of high modulus fibers 32, said primary saturant having 36 a melting point below approximately 300 degrees Celsius and a melt viscosity of less than approximately 1000 centipoise.
86. The flexible, rodent resistant reinforcement member 30 of embodiment 85, wherein said primary saturant 36 has a melting point between about 100 to about 150 degrees Celsius and a melt viscosity of less than 500 centipoise.
87. The flexible, rodent resistant reinforcement member 30 of embodiment 85, wherein said plurality of high modulus fibers 32 comprises a plurality of sized high modulus fibers selected from the group consisting of a plurality of sized or unsized carbon fibers and a plurality of sized or unsized high silica glass.
88. The flexible, rodent resistant reinforcement member 30 of embodiment 85, wherein said plurality of high modulus fibers 32 comprises a plurality of glass fiber strands 32.
89. The flexible, rodent resistant reinforcement member 30 of claim 88, wherein said plurality of glass fiber strands 32 comprises at least one glass fiber bundle 34, each of said at least one glass fiber bundle 34comprising a plurality of glass fiber filaments 32.
90. The flexible, rodent resistant reinforcement member 30 of claim 86, wherein said plurality of glass fiber strands 32 comprises a plurality of glass fiber filaments 32 and at least one glass fiber bundle 34, each of said at least one glass fiber bundle 34 comprising a plurality of glass fiber filaments 32.
91. The flexible, rodent resistant reinforcement member 30 of embodiment 85, wherein said primary saturant 36 comprises a low molecular weight mineral wax.
92. The flexible, rodent resistant reinforcement member 30 of embodiment 91, wherein said low molecular weight mineral wax is selected from the group consisting of a low molecular weight microcrystalline wax, a low molecular weight polyalphaolefin wax, a low molecular weight polyethylene wax, or a modified (oxidized or maleated)polyolefin such as polyethylene or polypropylene, and blends thereof.
93. The flexible, rodent resistant reinforcement member 30 of embodiment 85, wherein said primary saturant 36 comprises a blend of a low molecular weight microcrystalline wax and a styrene butadiene rubber, wherein said blend is between approximately 0.1 and 99.9 percent by weight of said low molecular weight microcrystalline wax and between approximately 0.1 and 99.9 percent by weight of said styrene butadiene rubber.
94. The flexible, rodent resistant reinforcement member 30 of embodiment 93, wherein said blend comprises a 50/50 by weight blend of said low molecular weight microcrystalline wax and said styrene butadiene rubber.
95. The flexible, rodent resistant reinforcement member 30 of embodiment 89,
   wherein said plurality of glass fiber strands 32 comprises a plurality of sized glass fiber strands selected from the group consisting of a plurality of sized or unsized E-type glass fiber strands and a plurality of sized or unsized ECR-type glass fibers.
96. The flexible, rodent resistant reinforcement member 30 of embodiment 85 further comprising a higher molecular weight polymer topcoat 38 coupled to said primary saturant 36.
97. The flexible, rodent resistant reinforcement member 30 of claim 96, wherein said primary saturant 36 comprises approximately 0.1 and 35 percent of the total weight of said flexible reinforcement member 30 and wherein said high molecular weight polymer topcoat comprises between approximately 0.1 and 35 percent of the total weight of said flexible reinforcement member 30.
98. The flexible, rodent resistant reinforcement member 30 of embodiment 97, wherein said primary saturant 36 comprises approximately 5 and 20 percent of the total weight of said flexible reinforcement member 30 and wherein said high molecular weight polymer topcoat 38 comprises between approximately 5 and 20 percent of the total weight of said flexible reinforcement member 30.
99. The flexible, rodent resistant reinforcement member 30 of embodiment 97, wherein said primary saturant 36 comprises approximately 10 and 15 percent of the total weight of said flexible reinforcement member 30 and wherein said high molecular weight polymer topcoat 38 comprises between approximately 10 and 15 percent of the total weight of said flexible reinforcement member 30.
100. The flexible, rodent resistant reinforcement member 30 of embodiment 96, wherein said high molecular weight polymer topcoat 38 is selected from the group consisting of a high molecular weight polyethylene topcoat, a high molecular weight polypropylene topcoat, a high molecular weight ethylene acrylic acid topcoat, a high molecular weight polypropylene and polyethylene copolymer topcoat, an ethylene vinyl acetate copolymer topcoat, a styrene-butadiene-styrene topcoat, a polybutadiene terephthlate polyether glycol topcoat, polyamide, polyolefins and thermoplastic elastomers, a superabsorbent polymer topcoat and blends thereof.
101. The flexible, rodent resistant reinforcement member 30 of embodiment 00, wherein the glass transition temperature (Tg) of said flexible reinforcement member 30 is greater than about 40°C.
102. The flexible, rodent resistant reinforcement member 30 of embodiment 100, wherein the adhesion of glass to polyethylene is greater than about 46 pounds of force per 0.5 inches of embedded strand.
103. The flexible, rodent resistant reinforcement member 30 of embodiment 96, wherein said high molecular weight polymer topcoat 38 comprises an ethylene acrylic acid polymer topcoat.
104. The flexible, rodent resistant reinforcement member 30 of embodiment 85, wherein said fiber diameter is between about 15 to about 36 microns.
105. The flexible, rodent resistant reinforcement member 30 of embodiment 104, wherein said fiber diameter is between about 34 and about 36 microns.
106. A method for forming a flexible, rodent resistant reinforcement member 30 for use in a communications cable, the method comprising:
   providing a high modulus fiber material 32 wherein the diameter of said fibers is between about 1 and 89 microns, said fiber material selected from the group consisting of a plurality of sized or unsized carbon fibers and a plurality of sized or unsized high silica glass;
   coating said fiber material with a low molecular weight primary saturant 36, said low molecular weight primary saturant 36 having a melting point below approximately 300 degrees Celsius and a melt viscosity of less than approximately 1000 centipoise, wherein the weight of said low molecular weight primary saturant 36 on said fiber material comprises between 0.1 and 35 percent of the flexible reinforcement member 30.
107. The method of embodiment 106, wherein coating said fiber material 32 comprises:
   introducing a low molecular weight primary saturant 36 to an application device 154;
   melting said low molecular weight primary saturant 36 within said application device 154 at a temperature sufficient to maintain said low molecular weight primary saturant 36 at a viscosity of approximately less than about 1000 centipoise;
   introducing said fiber material 32 to said application device to coat said low molecular weight primary saturant 36 onto said fiber material 32 to form a coated member 150;
   removing said coated member from said application device 154;
   introducing said coated member 150 to a stripper die 156 to remove an excess of said low molecular weight primary saturant 36 from said fiber material 32;
   cooling said coated member 150 to form the flexible reinforcement member 30,
   wherein the weight of said low molecular weight primary saturant 36 on said fiber material comprises between 10 and 35 percent of the flexible reinforcement member 30.
108. The method of embodiment 107, wherein introducing a low molecular weight primary saturant 36 to an application device 154 comprises introducing a low molecular weight primary saturant 36 to an application device, said low molecular weight primary saturant 36 comprising a blend of a low molecular weight microcrystalline wax and a styrene butadiene rubber material, wherein said blend is between approximately 0.1 and 99.9 percent by weight of said low molecular weight microcrystalline wax and between approximately 0.1 and 99.9 percent by weight of said styrene butadiene rubber.
109. The method of embodiment 107, wherein introducing a low molecular weight primary saturant 36 to an application device comprises introducing a low molecular weight primary saturant to an immersion bath.
110. The method of embodiment 107, further comprising introducing a high molecular weight polymer topcoat 38 onto said low molecular weight primary saturant 36.
111. The method of embodiment 110, wherein introducing said fiber material to said application device and introducing a high molecular weight polymer topcoat 38 onto said primary saturant 36 comprises:
   introducing a low molecular weight primary saturant 36 to a first application device 54;
   melting said low molecular weight primary saturant 36 within said first application device 54 at a temperature sufficient to maintain said low molecular weight primary saturant 36 at a viscosity of less than about 1000 centipoise;
   introducing said fiber material to said first application device 54 to coat said low molecular weight primary saturant 36 onto said fiber material to form a coated member 50;
   removing said coated member 50 from said first application device 54;
   introducing said coated member 50 to a stripper die 56 to remove an excess of said low molecular weight primary saturant 36 from said fiber material;
   introducing said coated member 50 to a high molecular weight topcoat material 38 contained within second application device 58 to form a topcoated member;
   removing said topcoated member from said second application device 58;
   introducing said topcoated member to a second stripper die 60 to remove an excess of said high molecular weight topcoat 38 material from said topcoated member; and
   cooling said topcoated member to form the flexible reinforcement member 30, wherein the weight of said low molecular weight primary saturant 36 on said fiber material comprises between 10 and 35 percent of the flexible reinforcement member 30 and wherein the weight of said high molecular topcoat material 38 8 comprises between approximately 1 and 25 percent of the flexible reinforcement member 30
112. The method of embodiment 10, wherein introducing a low molecular weight primary saturant 36 to a first application device 54 and introducing said coated member to a high molecular weight topcoated member contained within a second application device 58 comprises:
   introducing a low molecular weight primary saturant 36 to first application device 54, said primary saturant 36 comprising a low molecular weight mineral wax selected from the group consisting of a low molecular weight microcrystalline wax, a low molecular weight polyalphaolefin wax, a low molecular weight polyethylene wax, a low molecular weight polyethylene wax, a low molecular weight maleated polypropylene polymer and blends thereof; and
   introducing said coated member to a high molecular weight topcoat material 38 contained within second application device 58 to form a topcoated member, said high molecular weight topcoated material selected from the group consisting of a high molecular weight polyethylene topcoat, a high molecular weight polypropylene topcoat, a high molecular weight ethylene acrylic acid topcoat, a high molecular weight polypropylene and polyethylene copolymer topcoat, an ethylene vinyl acetate copolymer topcoat, a styrene-butadiene-styrene topcoat, polyamide topcoat and a polybutadiene terephthlate polyether glycol topcoat, a superabsorbent polymer topcoat and blends thereof.
113. The method of embodiment 07, wherein said fiber diameter is between about 15 to about 36 microns.
114. The method of embodiment 113, wherein said fiber diameter is between about 34 and about 36 microns.
115. The method of embodiment 107, wherein said fiber material is further selected from the group consisting of steel, brass, copper ceramic or rock wool fibers.
116. A method for improving strand integrity and decreasing water penetration and fiber-fiber abrasion in the high modulus fibers, in the form of strands and bundles, that comprise a flexible, rodent resistant reinforcement material used in communications cables, the method comprising:
   introducing a low molecular weight thermoplastic material to the high modulus fibers that penetrates the interstices of the fibers, wherein said low molecular weight thermoplastic material comprises between approximately 10 and 35 percent of the total weight of the flexible reinforcement material, wherein the diameter of said high modulus fibers is between about 1 and 89 microns.
117. The method of embodiment 116, wherein introducing a low molecular weight thermoplastic material comprises introducing a low molecular weight mineral wax to the high modulus fibers that penetrates the interstices of the high modulus fibers, wherein said low molecular weight mineral wax comprises between approximately 10 and 35 percent of the total weight of the flexible reinforcemement material.
118. The method of embodiment 116, wherein introducing a low molecular weight thermoplastic material comprises introducing a low molecular weight microcyrstalline wax to the high modulus fibers that penetrates the interstices of the high modulus fibers, wherein said low molecular weight microcrystalline wax comprises between approximately 10 and 35 percent of the total weight of the flexible reinforcement material.
119. The method of embodiment 116, wherein introducing a low molecular weight thermoplastic material comprises introducing a blend of a low molecular weight mineral wax and a styrene butadiene rubber compound to the high modulus fibers that penetrates the interstices of the high modulus fibers, wherein said blend comprises between approximately 10 and 35 percent of the total weight of the flexible reinforcement material.
120. The method of embodiment 116, wherein said fiber diameter is between about 15 to about 36 microns.
121. The method of embodiment 120, wherein said fiber diameter is between about 34 and about 36 microns.
122. The flexible, rodent resistant reinforcement member 30 of embodiment 85, further comprising an abrasive, particulate material.
123. The flexible, rodent resistant reinforcement member 30 of embodiment 122, wherein said abrasive particulate material is selected from the group consisting of crushed ceramic, metal slivers, abrasive particles such as alumina, silica, sand stone, quartz, salts, diamond dust, iron pyrite flint, slate vermicalcite or other flaky rock particles, crushed glass, silicon carbide, abrasive bauxite, metallic shards or combinations.
124. The method of embodiment 107, further comprising the step of coating said fiber material with an abrasive, particulate material.
125. The method of embodiment 124, wherein said abrasive particulate material is selected from the group consisting of crushed ceramic, metal slivers, abrasive particles such as alumina, silica, sand stone, quartz, salts, diamond dust, iron pyrite flint, slate vermicalcite or other flaky rock particles, crushed glass, silicon carbide, abrasive bauxite, metallic shards or combinations.
126. The flexible, rodent resistant reinforcement member 30 of embodiment 96, wherein said high molecular weight topcoat is a polymer containing a sodium or potassium polyacrylate salt particulate material and wherein said polymer is selected from the group consisting of ethylene vinyl acetate (EVA) polymers, block copolymers of polybutylene terepthalate and long chain polyether glycols, thermoplastic elastomers, olefins or urethanes, polypropylene, polyethylene, polyurethane or low molecular weight mineral wax.
127. The method of embodiment 113, wherein said high molecular weight topcoat
   38 is a polymer containing a sodium or potassium polyacrylate salt particulate material and wherein said polymer is selected from the group consisting of ethylene vinyl acetate (EVA) polymers, block copolymers of polybutylene terepthalate and long chain polyether glycols, thermoplastic elastomers, olefins or urethanes, polypropylene, polyethylene, polyurethane or low molecular weight mineral wax.
128. A flexible reinforcement member 30 for a communications cable comprising:
   a plurality of high modulus fibers 32;
   a primary saturant 36 coupled to said plurality of high modulus fibers, said primary saturant having a melting point below approximately 300 degrees Celsius and a melt viscosity of less than approximately 1000 centipoise; and
   a higher molecular weight, water-swellable polymer topcoat 38 coupled to said primary saturant 36.
129. The flexible reinforcement member 30 of embodiment 128, wherein said primary saturant 36 has a melting point between about 100 to about 150 degrees Celsius and a melt viscosity of less than 500 centipoise.
130. The flexible reinforcement member 30 of embodiment 128, wherein said plurality of high modulus fibers 32 comprises a plurality of sized high modulus fibers selected from the group consisting of a plurality of sized or unsized aramid fibers and a plurality of sized or unsized poly(p-phenylene-2,6-benzobisoxazole) (PBO) fibers and a plurality of sized or unsized carbon fibers and a plurality of sized or unsized high silica glass fibers and sized or unsized high tenacity, linearized polyethylene fiber.
131. The flexible reinforcement member 30 of embodiment 128, wherein said plurality of high modulus fibers 32 comprises a plurality of glass fiber strands.
132. The flexible reinforcement member of embodiment 131, wherein said plurality of glass fiber strands 32 comprises at least one glass fiber bundle 34, each of said at least one glass fiber bundle 34 comprising a plurality of glass fiber filaments 32.
133. The flexible reinforcement member of embodiment 129, wherein said plurality of glass fiber strands 32 comprises a plurality of glass fiber filaments 32 and at least one glass fiber bundle 34, each of said at least one glass fiber bundle 34 comprising a plurality of glass fiber filaments 32.
134. The flexible reinforcement member of embodiment 128, wherein said primary saturant 36 comprises a low molecular weight mineral wax.
135. The flexible reinforcement member 30 of embodiment 134, wherein said low molecular weight mineral wax is selected from the group consisting of a low molecular weight microcrystalline wax, a low molecular weight polyalphaolefin wax, a low molecular weight polyethylene wax, or a modified (oxidized or maleated) polyolefin such as polyethylene or polypropylene, and blends thereof.
136. The flexible reinforcement member 30 of claim 128, wherein said primary saturant 36 comprises a blend of a low molecular weight microcrystalline wax and a styrene butadiene rubber, wherein said blend is between approximately 0.1 and 99.9 percent by weight of said low molecular weight microcrystalline wax and between approximately 0.1 and 99.9 percent by weight of said styrene butadiene rubber.
137. The flexible reinforcement member 30 of embodiment 136, wherein said blend comprises a 50/50 by weight blend of said low molecular weight microcrystalline wax and said styrene butadiene rubber.
138. The flexible reinforcement member 30 of embodiment 131, wherein said plurality of glass fiber strands comprises a plurality of sized glass fiber strands selected from the group consisting of a plurality of sized or unsized E-type glass fiber strands and a plurality of sized or unsized ECR-type glass fibers.
139. The flexible reinforcement member of embodiment 128, wherein said primary saturant 36 comprises approximately 0.1 and 35 percent of the total weight of said flexible reinforcement member 30 and wherein said high molecular weight water-swellable polymer topcoat 38 comprises between approximately 0.1 and 35 percent of the total weight of said flexible reinforcement member 30.
140. The flexible reinforcement member 30 of embodiment 139, wherein said primary saturant comprises 36 approximately 5 and 20 percent of the total weight of said flexible reinforcement member 30 and wherein said high molecular weight water-swellable polymer topcoat 38 comprises between approximately 5 and 20 percent of the total weight of said flexible reinforcement member 30.
141. The flexible reinforcement member 30 of embodiment 139, wherein said primary saturant 36 comprises approximately 10 and 15 percent of the total weight of said flexible reinforcement member 30 and wherein said high molecular weight water-swellable polymer topcoat 38 comprises between approximately 10 and 15 percent of the total weight of said flexible reinforcement member.
142. The flexible reinforcement member 30 of embodiment 128, wherein said high molecular weight water-swellable polymer topcoat 38 is selected from the group consisting of ethylene vinyl acetate (EVA) polymers, block copolymers of polybutylene terepthalate, copolymers of long chain polyether glycols, thermoplastic elastomers, olefins, urethanes, polypropylene, polyethylene, polyurethane, low molecular weight mineral wax, polyacrylamides and blends thereof.
143. The flexible reinforcement member 30 of embodiment 142, wherein the glass transition temperature (Tg) of said flexible reinforcement is greater than about 40°C.
144. The flexible reinforcement member 30 of claim 142, wherein said high molecular weight water-swellable polymer topcoat 38 comprises an ethylene vinyl acetate polymer topcoat.
145. The flexible reinforcement member 30 of embodiment 128, wherein said
   high molecular weight water-swellable topcoat 38 is a blend of water-swellable polymer topcoat and non water-swellable topcoat.
146. The flexible reinforcement member 30 of embodiment 145, wherein the water absorbency for the reinforcement member is between about 111 to about 142 percent by weight.
147. A method for forming a flexible reinforcement member 30 for use in a communications cable, the method comprising:
   providing a high modulus fiber material 32, said fiber material selected from the group consisting of a plurality of sized or unsized aramid fibers and a plurality of sized or unsized poly(p-phenylene-2,6-benzobisoxazole) (PBO) fibers, sized or unsized carbon fibers or sized or unsized high tenacity, linearized polyethylene fiber, and a plurality of sized or unsized high silica glass fibers;
   coating said fiber material 32 with a low molecular weight primary saturant 36, said low molecular weight primary saturant 36 having a melting point below approximately 300 degrees Celsius and a melt viscosity of less than approximately 1000 centipoise, wherein the weight of said low molecular weight primary saturant on said fiber material comprises between 0.1 and 35 percent of the flexible reinforcement member;
   coating said fiber material 32 with a higher molecular weight water-swellable polymer topcoat 38.
148. The method of embodiment 147, wherein said step of coating said fiber material 32 with a low molecular weight primary saturant 36 further includes introducing a low molecular weight primary saturant 36 to an application device 154 comprises introducing a low molecular weight primary saturant 36 to an application device 154, said low molecular weight primary saturant comprising a blend of a low molecular weight microcrystalline wax and a styrene butadiene rubber material, wherein said blend is between approximately 0.1 and 99.9 percent by weight of said low molecular weight microcrystalline wax and between approximately 0.1 and 99.9 percent by weight of said styrene butadiene rubber.
149. The method of embodiment 148, wherein introducing a low molecular weight primary saturant 36 to an application device 154 comprises introducing a low molecular weight primary saturant to an immersion bath.
150. The method of embodiment 147, further comprising introducing a high molecular weight water-swellable, polymer topcoat 38 onto said low molecular weight primary saturant 36.
151. The method of embodiment 148, wherein introducing said fiber material to said application device and introducing a high molecular weight polymer topcoat 38 onto said primary saturant comprises 36:
   introducing a low molecular weight primary saturant 36 to a first application device 54;
   melting said low molecular weight primary saturant 36 within said first application device 54 at a temperature sufficient to maintain said low molecular weight primary saturant 36 at a viscosity of less than about 1000 centipoise;
   introducing said fiber material to said first application device 54 to coat said low molecular weight primary saturant 36 onto said fiber material to form a coated member 50;
   removing said coated member 50 from said first application device 54;
   introducing said coated member 50 to a stripper die 56 to remove an excess of said low molecular weight primary saturant 36 from said fiber material;
   introducing said coated member to a high molecular weight water-swellable topcoat material 38 contained within second application device 58 to form a topcoated member;
   removing said topcoated member from said second application device 58;
   introducing said topcoated member to a second stripper die 60 to remove an excess of said high molecular weight topcoat material 38 from said topcoated member; and
   cooling said topcoated member to form the flexible reinforcement member 30, wherein the weight of said low molecular weight primary saturant 36 on said fiber material comprises between 10 and 35 percent of the flexible reinforcement member 30 and wherein the weight of said high molecular topcoat material comprises between approximately 1 and 25 percent of the flexible reinforcement member 30.
152. The method of embodiment 147, wherein introducing a low molecular weight primary saturant 36 to a first application device 54 and introducing said coated member to a high molecular weight water-swellable topcoated member contained within a second application device 58 comprises:
   introducing a low molecular weight primary saturant 36 to first application device 54, said primary saturant 36 comprising a low molecular weight mineral wax selected from the group consisting of a low molecular weight microcrystalline wax, a low molecular weight polyalphaolefin wax, a low molecular weight polyethylene wax, a low molecular weight polyethylene wax, a low molecular weight maleated polypropylene polymer and blends thereof; and
   introducing said coated member 50 to a high molecular weight water-swellable topcoat material 38 contained within second application 58 device to form a topcoated member, said high molecular weight topcoated material selected from the group consisting of ethylene vinyl acetate (EVA) polymers, block copolymers of polybutylene terepthalate, copolymers of long chain polyether glycols, thermoplastic elastomers, olefins, urethanes, polypropylene, polyethylene, polyurethane, low molecular weight mineral wax, polyacrylamides and blends thereof.
153. A method for forming a water-swellable, flexible reinforcement member
   for use 30 in a communications cable, the method comprising:
   providing a high modulus fiber material, said fiber material selected from the group consisting of a plurality of sized or unsized aramid fibers and a plurality of sized or unsized poly(p-phenylene-2,6-benzobisoxazole) (PBO) fibers, sized or unsized carbon fibers or sized or unsized high tenacity, linearized polyethylene fiber, and a plurality of sized or unsized high silica glass fibers wherein said high modulus fiber material is pre-coated with a higher molecular weight water-swellable polymer topcoat; and
   coating said fiber material with a low molecular weight primary saturant 36, said low molecular weight primary saturant having a melting point below approximately 300 degrees Celsius and a melt viscosity of less than approximately 1000 centipoise, wherein the weight of said low molecular weight primary saturant on said fiber material comprises between 0.1 and 35 percent of the flexible reinforcement member 30.
154. The method of embodiment 153, wherein introducing a low molecular weight primary saturant 36 to an application device 154 comprises introducing a low molecular weight primary saturant to an application device 154, said low molecular weight primary saturant 36 comprising a blend of a low molecular weight microcrystalline wax and a styrene butadiene rubber material, wherein said blend is between approximately 0.1 and 99.9 percent by weight of said low molecular weight microcrystalline wax and between approximately 0.1 and 99.9 percent by weight of said styrene butadiene rubber.
155. The method of embodiment 153, wherein introducing a low molecular weight primary saturant 36 to an application device comprises introducing a low molecular weight primary saturant to an immersion bath.
156. The method of embodiment 155, wherein the water absorbency for the reinforcement member is between about 349 to about 438 percent by weight.
157. The method of embodiment 156, wherein said high modulus fiber material is pre-coated with a high molecular weight, water-swellable polymer topcoat selected from the group consisting of ethylene vinyl acetate (EVA) polymers, block copolymers of polybutylene terepthalate, copolymers of long chain polyether glycols, thermoplastic elastomers, olefins, urethanes, polypropylene, polyethylene, polyurethane, low molecular weight mineral wax, polyacrylamides and blends thereof.

## Claims

1. A flexible reinforcement member 30 for a communications cable comprising:
a plurality of high modulus fibers 32, said plurality of high modulus fibers comprises a plurality of glass fiber strands, wherein said plurality of glass fiber strands 32 comprises a plurality of sized glass fiber strands selected from the group consisting of a plurality of sized or unsized E-type glass fiber strands and a plurality of sized or unsized ECR-type glass fibers; and
a primary saturant 36 coupled to said plurality of high modulus fibers 32, said primary saturant 36 having a melting point below approximately 300 degrees Celsius and a melt viscosity of less than approximately 1000 centipoise.

2. The flexible reinforcement member 30 of claim 1, wherein said primary saturant 36 has a melting point between about 100 to about 150 degrees Celsius and a melt viscosity of less than 500 centipoise.

3. The flexible reinforcement member 30 of claim 1, wherein said plurality of glass fiber strands comprises at least one glass fiber bundle 34, each of said at least one glass fiber bundle comprising a plurality of glass fiber filaments 32.

4. The flexible reinforcement member 30 of claim 2, wherein said plurality of glass fiber strands comprises a plurality of glass fiber filaments 32 and at least one glass fiber bundle 34, each of said at least one glass fiber bundle 34 comprising a plurality of glass fiber filaments 32.

5. The flexible reinforcement member 30 of claim 1, wherein said primary saturant 36 comprises a low molecular weight mineral wax.

6. The flexible reinforcement member 30 of claim 5, wherein said low molecular weight mineral wax is selected from the group consisting of a low molecular weight microcrystalline wax, a low molecular weight polyalphaolefin wax, a low molecular weight polyethylene wax, or a modified (oxidized or maleated) polyolefin such as polyethylene or polypropylene, and blends thereof.

7. The flexible reinforcement member 30 of claim 1, wherein said primary saturant 36 comprises a blend of a low molecular weight microcrystalline wax and a styrene butadiene rubber, wherein said blend is between approximately 0.1 and 99.9 percent by weight of said low molecular weight microcrystalline wax and between approximately 0.1 and 99.9 percent by weight of said styrene butadiene rubber.

8. The flexible reinforcement member 30 of claim 7, wherein said blend comprise a 50/50 by weight blend of said low molecular weight microcrystalline wax and said styrene butadiene rubber.

9. The flexible reinforcement member 30 of claim 1, wherein said plurality of glass fiber strands 32 comprises a plurality of sized glass fiber strands selected from the group consisting of a plurality of sized or unsized E-type glass fiber strands and a plurality of sized or unsized ECR-type glass fibers.

10. The flexible reinforcement member 30 of claim 1 further comprising a higher molecular weight polymer topcoat 38 coupled to said primary saturant 36.

11. The flexible reinforcement member 30 of claim 10, wherein said primary saturant 36 comprises approximately 0.1 and 35 percent of the total weight of said flexible reinforcement member 30 and wherein said high molecular weight polymer topcoat 38 comprises between approximately 0.1 and 35 percent of the total weight of said flexible reinforcement member 30.

12. The flexible reinforcement member 30 of claim 11, wherein said primary saturant 36 comprises approximately 5 and 20 percent of the total weight of said flexible reinforcement member 30 and wherein said high molecular weight polymer topcoat 38 comprises between approximately 5 and 20 percent of the total weight of said flexible reinforcement member 30.

13. The flexible reinforcement member 30 of claim 11, wherein said primary saturant 36 comprises approximately 10 and 15 percent of the total weight of said flexible reinforcement member 30 and wherein said high molecular weight polymer topcoat 38 comprises between approximately 10 and 15 percent of the total weight of said flexible reinforcement member 30.

14. The flexible reinforcement member 30 of claim 10, wherein said high molecular weight polymer topcoat 38 is selected from the group consisting of a high molecular weight polyethylene topcoat, a high molecular weight polypropylene topcoat, a high molecular weight ethylene acrylic acid topcoat, a high molecular weight polypropylene and polyethylene copolymer topcoat, an ethylene vinyl acetate copolymer topcoat, a styrene-butadiene-styrene topcoat, a polybutadiene terephthlate polyether glycol topcoat, polyamide, polyolefins and thermoplastic elastomers, and blends thereof.

15. The flexible reinforcement member 30 of claim 14, wherein the glass transition temperature (Tg) of said flexible reinforcement is greater than about 40°C.

16. The flexible reinforcement member 30 of claim 14, wherein the adhesion of glass to polyethylene is greater than about 46 pounds of force per 0.5 inches of embedded strand.

17. The flexible reinforcement member 30 of claim 10, wherein said high molecular weight polymer topcoat 38 comprises an ethylene acrylic acid polymer topcoat.

18. The flexible reinforcement member 30 of claim 10, wherein said high molecular weight polymer topcoat 38 is selected from the group consisting of a high molecular weight polyethylene, a high molecular weight polypropylene, a high molecular weight ethylene acrylic acid, a high molecular weight polypropylene, a high molecular weight polyethylene copolymer, an ethylene vinyl acetate copolymer, a styrene-butadiene-styrene, an acrylonitrile butadiene-styrene, a polybutadiene terephthlate polyether glycol, polyamides, polyolefins and thermoplastic elastomers, thermoplastic polyesters, thermoplastic olefins, thermoplastic urethanes, fluoropolymers, polyvinyl chloride compounds, acetals, polycarbonates, polyphenylene sulfides, polysulfones, modified polyphenylene oxides, polyimides, poly-amide-imides and blends thereof.
